(19) **Europäisches Patentamt / European Patent Office / Office européen des brevets**

(11) **EP 4 443 133 A1**

(12) # EUROPEAN PATENT APPLICATION
published in accordance with Art. 153(4) EPC

(43) Date of publication:
**09.10.2024 Bulletin 2024/41**

(21) Application number: **22901134.1**

(22) Date of filing: **21.11.2022**

(51) International Patent Classification (IPC):
***G01N 17/00*** (2006.01)

(52) Cooperative Patent Classification (CPC):
**G01N 17/00**

(86) International application number:
**PCT/JP2022/042992**

(87) International publication number:
**WO 2023/100701 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.12.2021 JP 2021195339**

(71) Applicant: **Kubota Corporation**
**Osaka 556-8601 (JP)**

(72) Inventors:
• **FUNAHASHI, Goro**
**Amagasaki-shi, Hyogo 660-0095 (JP)**
• **OKUMURA, Yuta**
**Amagasaki-shi, Hyogo 660-0095 (JP)**
• **KAWAKATSU, Tomo**
**Sakai-shi, Osaka 590-0908 (JP)**
• **TAKIZAWA, Satoshi**
**Tokyo 113-8654 (JP)**

(74) Representative: **Maiwald GmbH**
**Engineering**
**Elisenhof**
**Elisenstrasse 3**
**80335 München (DE)**

(54) **BURIED PIPE WATER LEAKAGE INCIDENT RATE PREDICTING DEVICE, BURIED PIPE WATER LEAKAGE INCIDENT RATE PREDICTING METHOD, AND PROGRAM**

(57) A buried piping probability-of-water-leakage-accidents prediction apparatus (3) includes: an exceedance-probability-of-pipe-wall-thickness calculation unit (52); and a probability-of-water-leakage-accidents calculation unit (54). The exceedance-probability-of-pipe-wall-thickness calculation unit (52) calculates an exceedance probability of pipe wall thickness of buried piping by inputting a burial environment, a burial period of time and a pipe wall thickness of the buried piping to an exceedance-probability-of-pipe-wall-thickness prediction model (21). The probability-of-water-leakage-accidents calculation unit (54) calculates a probability of water leakage accidents of the buried piping using the exceedance probability of pipe wall thickness and a conversion coefficient (23).

FIG.34

EP 4 443 133 A1

**Description**

TECHNICAL FIELD

The present disclosure relates to a buried piping probability-of-water-leakage-accidents prediction apparatus, a buried piping probability-of-water-leakage-accidents prediction method, and a program.

BACKGROUND ART

Piping such as water piping is buried in the ground. The piping is cast iron piping or ductile piping, for example. Piping corrodes while the piping is used for a long period of time. Japanese Patent Laying-Open No. 2007-107882 (PTL 1) discloses a piping corrosion prediction method.

CITATION LIST

PATENT LITERATURE

PTL 1: Japanese Patent Laying-Open No. 2007-107882

SUMMARY OF INVENTION

TECHNICAL PROBLEM

An object of the present disclosure is to provide a buried piping probability-of-water-leakage-accidents prediction apparatus, a buried piping probability-of-water-leakage-accidents prediction method, and a program that are capable of more accurately predicting a probability of water leakage accidents of buried piping for an arbitrary burial period of time.

SOLUTION TO PROBLEM

A buried piping probability-of-water-leakage-accidents prediction apparatus of the present disclosure includes: an exceedance-probability-of-pipe-wall-thickness calculation unit; and a probability-of-water-leakage-accidents calculation unit. The exceedance-probability-of-pipe-wall-thickness calculation unit calculates an exceedance probability of pipe wall thickness of buried piping by inputting a burial environment, a burial period of time and a pipe wall thickness of the buried piping to an exceedance-probability-of-pipe-wall-thickness prediction model. The probability-of-water-leakage-accidents calculation unit calculates a probability of water leakage accidents of the buried piping using the exceedance probability of pipe wall thickness of the buried piping and a conversion coefficient. The exceedance-probability-of-pipe-wall-thickness prediction model is generated in accordance with a burial environment of piping and a pipe wall thickness of the piping, and provides an exceedance probability of pipe wall thickness of the piping that continuously changes with a continuous change in a burial period of time of the piping. The conversion coefficient is a coefficient that converts the exceedance probability of pipe wall thickness of the piping or a first index that can be calculated from the exceedance probability of pipe wall thickness of the piping into a probability of water leakage accidents of the piping or a second index that can calculate the probability of water leakage accidents of the piping.

A buried piping probability-of-water-leakage-accidents prediction method of the present disclosure includes: a step of calculating an exceedance probability of pipe wall thickness of buried piping by inputting a burial environment, a burial period of time and a pipe wall thickness of the buried piping to an exceedance-probability-of-pipe-wall-thickness prediction model; and a step of calculating a probability of water leakage accidents of the buried piping using the exceedance probability of pipe wall thickness of the buried piping and a conversion coefficient. The exceedance-probability-of-pipe-wall-thickness prediction model is generated in accordance with a burial environment of piping and a pipe wall thickness of the piping, and provides an exceedance probability of pipe wall thickness of the piping that continuously changes with a continuous change in a burial period of time of the piping. The conversion coefficient is a coefficient that converts the exceedance probability of pipe wall thickness of the piping or a first index that can be calculated from the exceedance probability of pipe wall thickness of the piping into a probability of water leakage accidents of the piping or a second index that can calculate the probability of water leakage accidents of the piping.

A program of the present disclosure causes a processor to execute each step of the buried piping probability-of-water-leakage-accidents prediction method of the present disclosure.

ADVANTAGEOUS EFFECTS OF INVENTION

According to the buried piping probability-of-water-leakage-accidents prediction apparatus, the buried piping probability-of-water-leakage-accidents prediction method, and the program of the present disclosure, it is possible to more accurately predict a probability of water leakage accidents of buried piping.

BRIEF DESCRIPTION OF DRAWINGS

Fig. 1 is a diagram showing a schematic configuration of a buried piping probability-of-water-leakage-accidents prediction system of a first embodiment and a second embodiment.

Fig. 2 is a schematic diagram showing a hardware configuration of a buried piping probability-of-water-leakage-accidents prediction model generation apparatus of the first embodiment and the second embodiment.

Fig. 3 is a block diagram describing a functional configuration of the buried piping probability-of-water-leakage-accidents prediction model generation apparatus of the first embodiment and the second embodiment.

Fig. 4 is a diagram showing an example of a data structure of reference piping data.

Fig. 5 is a diagram showing an example of a data structure of an exceedance-probability-of-pipe-wall-thickness prediction model of the first embodiment and the second embodiment.

Fig. 6 is a diagram showing an example of the exceedance-probability-of-pipe-wall-thickness prediction model of the first embodiment and the second embodiment.

Fig. 7 is a diagram showing an example of a data structure of a conversion coefficient of the first embodiment and the second embodiment.

Fig. 8 is a diagram showing an example of a part of the reference piping data.

Fig. 9 is a diagram showing a flowchart of a method for generating the exceedance-probability-of-pipe-wall-thickness prediction model of the first embodiment.

Fig. 10 is a diagram showing a flowchart of a method for calculating the lag time of corrosion.

Fig. 11 is a diagram showing a histogram representing the distribution of the number of the reference piping data with respect to a burial period of time of reference piping.

Fig. 12 is a diagram showing $1 - P(T_{ref})$.

Fig. 13 is a diagram showing a probability $Q(t_L)$ of lag time of corrosion.

Fig. 14 is a diagram showing a cumulative relative frequency of lag time of corrosion and a cumulative relative frequency of a reference corrosion depth.

Fig. 15 is a diagram showing a flowchart of a method for calculating the cumulative relative frequency of the reference corrosion depth.

Fig. 16 is a diagram showing a data structure of data of the lag time of corrosion.

Fig. 17 is a diagram showing modified reference piping data.

Fig. 18 is a diagram showing data of an exceedance probability of corrosion depth and an exceedance-probability-of-corrosion-depth prediction model.

Fig. 19 is a diagram showing a flowchart of a method for generating the exceedance-probability-of-corrosion-depth prediction model corresponding to a burial environment and a burial period of time of a predetermined range.

Fig. 20 is a diagram showing an example of the modified reference piping data and a basic regression line.

Fig. 21 is a diagram showing an example of the modified reference piping data and a plurality of percentile regression lines.

Fig. 22 is a diagram showing a probability density function and a cumulative distribution function of the distribution of the basic regression line.

Fig. 23 is a diagram showing an example of data including a probability density of a percentile regression line, the probability of lag time of corrosion, and a probability index.

Fig. 24 is a diagram showing an example of data indicating a relationship among the burial environment, the burial period of time of the predetermined range, and a corrosion depth reaching probability.

Fig. 25 is a diagram showing data of a coefficient a and a regression line of coefficient a.

Fig. 26 is a diagram showing data of a coefficient b and a regression curve of coefficient b.

Fig. 27 is a diagram showing a flowchart of a method for calculating the conversion coefficient of the first embodiment.

Fig. 28 is a diagram showing an example of a data structure of reference piping data for conversion coefficient calculation of the first embodiment.

Fig. 29 is a diagram showing an example of a relationship between an exceedance probability of pipe wall thickness and a probability of water leakage accidents for ductile piping.

Fig. 30 is a diagram showing an example of a relationship between an exceedance probability of pipe wall thickness and a pipeline length for ductile piping.

Fig. 31 is a diagram showing an example of a relationship between an exceedance probability of pipe wall thickness and a probability of water leakage accidents for cast iron piping.

Fig. 32 is a diagram showing an example of a relationship between an exceedance probability of pipe wall thickness and a pipeline length for cast iron piping.

Fig. 33 is a schematic view showing a hardware configuration of a buried piping probability-of-water-leakage-accidents prediction apparatus of the first embodiment and the second embodiment.

Fig. 34 is a block diagram describing a functional configuration of the buried piping probability-of-water-leakage-accidents prediction apparatus of the first embodiment and the second embodiment.

Fig. 35 is a diagram showing an example of a pipeline map included in buried piping data of the first embodiment and the second embodiment.

Fig. 36 is a diagram showing an example of a data structure of buried piping attribute data included in the buried piping data of the first embodiment and the second embodiment.

Fig. 37 is a diagram showing a data structure of a nominal pipe wall thickness database unit.

Fig. 38 is a diagram showing a burial environment map.

Fig. 39 is a diagram showing ground-burial environment correspondence data.

Fig. 40 is a diagram showing a data structure of preprocessed buried piping data of the first embodiment.

Fig. 41 is a diagram showing an example of a buried piping probability-of-water-leakage-accidents prediction result of the first embodiment and the second embodiment.

Fig. 42 is a diagram showing another example of the buried piping probability-of-water-leakage-accidents prediction result of the first embodiment and the second embodiment.

Fig. 43 is a diagram showing a flowchart of a buried piping probability-of-water-leakage-accidents prediction method of the first embodiment and the second embodiment.

Fig. 44 is a diagram showing a flowchart of a method for calculating a probability of water leakage accidents of the first embodiment.

Fig. 45 is a diagram showing a flowchart of a method for calculating a conversion coefficient of the second embodiment.

Fig. 46 is a diagram showing an example of a data structure of reference piping data for conversion coefficient calculation of the second embodiment.

Fig. 47 is a diagram showing an example of a relationship between a number-of-water-leakage-accidents evaluation index and the number of water leakage accidents per unit time for ductile piping.

Fig. 48 is a diagram showing an example of a relationship between a burial environment and a pipeline length for ductile piping.

Fig. 49 is a diagram showing an example of a relationship between a number-of-water-leakage-accidents evaluation index and the number of water leakage accidents per unit time for cast iron piping.

Fig. 50 is a diagram showing an example of a relationship between a burial environment and a pipeline length for cast iron piping.

Fig. 51 is a diagram showing a data structure of preprocessed buried piping data of the second embodiment.

Fig. 52 is a diagram showing a flowchart of a method for calculating a probability of water leakage accidents of the second embodiment.

DESCRIPTION OF EMBODIMENTS

(First Embodiment)

<Buried Piping Probability-of-Water-Leakage-Accidents Prediction System 1>

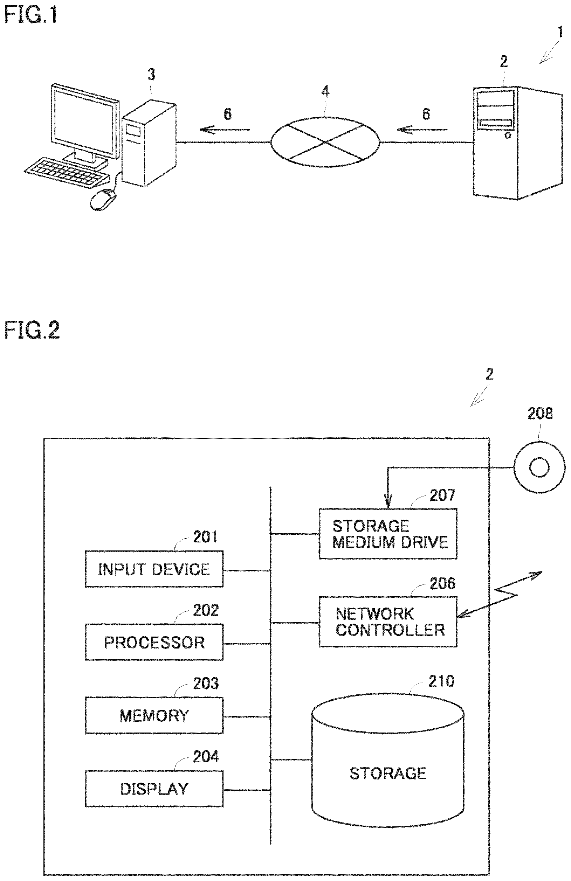

A buried piping probability-of-water-leakage-accidents prediction system 1 of the present embodiment will be described with reference to Fig. 1. Buried piping probability-of-water-leakage-accidents prediction system 1 includes a buried piping probability-of-water-leakage-accidents prediction model generation apparatus 2 and a buried piping probability-of-water-leakage-accidents prediction apparatus 3.

<Buried Piping Probability-of-Water-Leakage-Accidents Prediction Model Generation Apparatus 2>

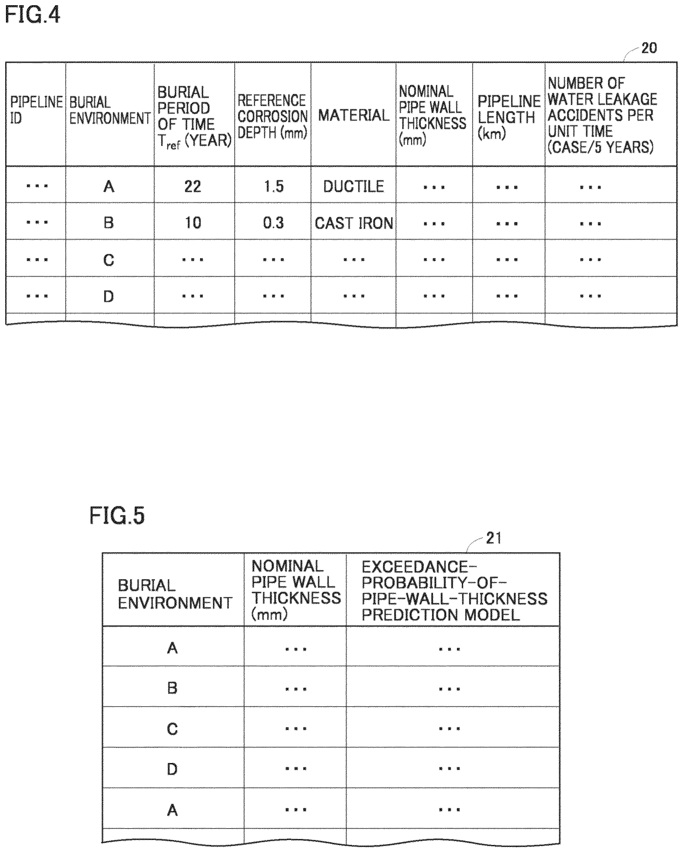

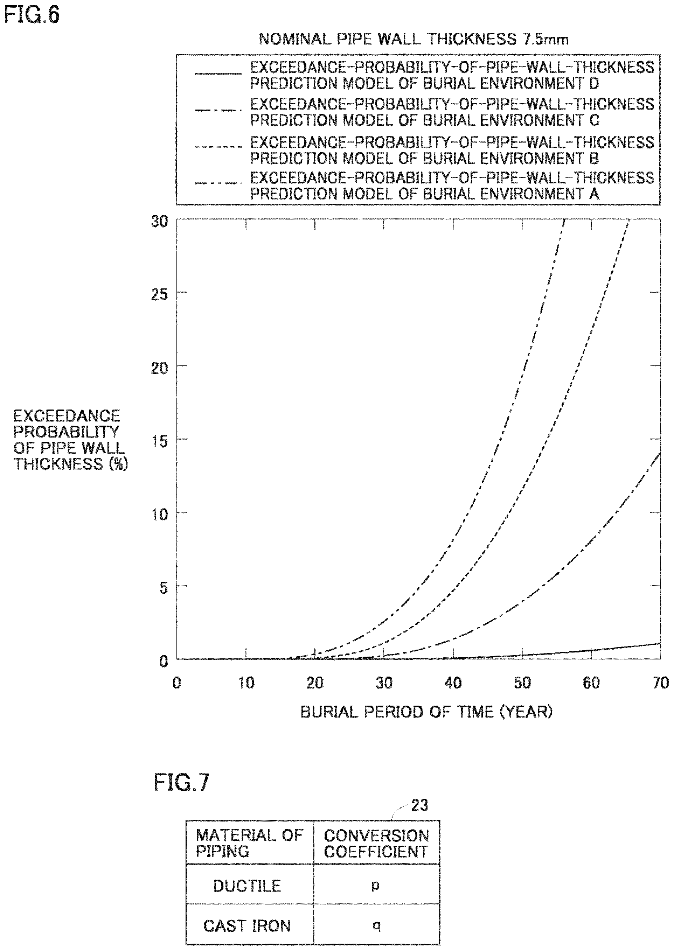

Referring to Figs. 1 to 3, buried piping probability-of-water-leakage-accidents prediction model generation apparatus 2 generates a buried piping probability-of-water-leakage-accidents prediction model 6 from reference piping data 20 (see Fig. 4). Buried piping probability-of-water-leakage-accidents prediction model generation apparatus 2 transmits buried piping probability-of-water-leakage-accidents prediction model 6 to buried piping probability-of-water-leakage-accidents prediction apparatus 3. Buried piping probability-of-water-leakage-accidents prediction model 6 includes, for example, an exceedance-probability-of-pipe-wall-thickness prediction model 21 (see Figs. 5 and 6) and a conversion coefficient 23 (see Fig. 7).

<Hardware Configuration>

A hardware configuration of buried piping probability-of-water-leakage-accidents prediction model generation apparatus 2 will be described with reference to Fig. 2. Buried piping probability-of-water-leakage-accidents prediction model generation apparatus 2 includes an input device 201, a processor 202, a memory 203, a display 204, a network controller 206, a storage medium drive 207, and a storage 210.

Input device 201 accepts various types of input operations. Input device 201 is, for example, a keyboard, a mouse or a touch panel.

Display 204 displays information required for processing in buried piping probability-of-water-leakage-accidents prediction model generation apparatus 2, and the like. Display 204 is, for example, a liquid crystal display (LCD) or an organic electroluminescence (EL) display.

By executing a below-described program, processor 202 performs processing required to realize the function of buried piping probability-of-water-leakage-accidents prediction model generation apparatus 2. Processor 202 is implemented, for example, by a central processing unit (CPU), a graphics processing unit (GPU) or the like.

Memory 203 provides a storage area that temporarily stores a program code, a work memory or the like when processor 202 executes the below-described program. Memory 203 is, for example, a volatile memory device such as a dynamic random access memory (DRAM) or a static random access memory (SRAM).

Network controller 206 receives and transmits a program or data to and from an arbitrary apparatus including buried piping probability-of-water-leakage-accidents prediction apparatus 3 through a communication network 4 (see Fig. 1). For example, network controller 206 transmits buried piping probability-of-water-leakage-accidents prediction model 6 to buried piping probability-of-water-leakage-accidents prediction apparatus 3 through communication network 4. Network controller 206 is in conformity with an arbitrary communication scheme such as, for example, Ethernet (registered trademark), a wireless local area network (LAN) or Bluetooth (registered trademark).

Storage medium drive 207 is a device that reads out a program or data stored in a storage medium 208. Furthermore, storage medium drive 207 may be a device that writes a program or data to storage medium 208. Storage medium 208 is a non-transitory storage medium and stores the program or data in a non-volatile manner. Storage medium 208 is, for example, an optical storage medium such as an optical disk (e.g., a CD-ROM or a DVD-ROM), a semiconductor storage medium such as a flash memory or a universal serial bus (USB) memory, a magnetic storage medium such as a hard disk, a flexible disk (FD) or a storage tape, or a magneto-optical storage medium such as a magneto-optical (MO) disk.

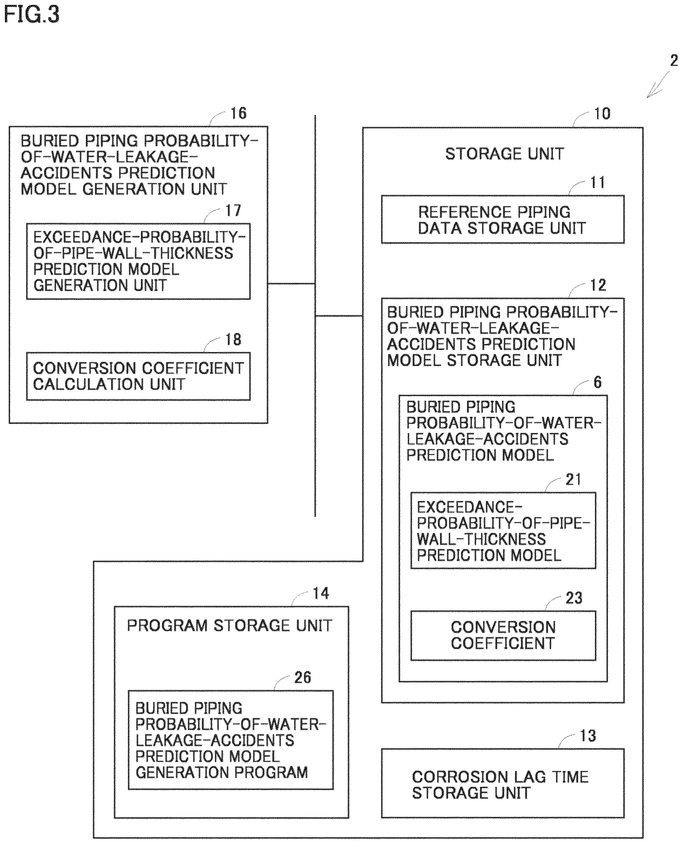

Storage 210 stores reference piping data 20 (see Fig. 4), buried piping probability-of-water-leakage-accidents prediction model 6 (see Fig. 3), the program executed in processor 202, and the like. This program includes a buried piping probability-of-water-leakage-accidents prediction model generation program 26 (see Fig. 3). Buried piping probability-of-water-leakage-accidents prediction model generation program 26 is a program for generating buried piping probability-of-water-leakage-accidents prediction model 6 from reference piping data 20. Storage 210 is, for example, a non-volatile memory device such as a hard disk or an SSD.

The program for realizing the function of buried piping probability-of-water-leakage-accidents prediction model generation apparatus 2 (including buried piping probability-of-water-leakage-accidents prediction model generation program 26 (see Fig. 3)) may be stored in non-transitory storage medium 208 and distributed, and be installed in storage 210. The program for realizing the function of buried piping probability-of-water-leakage-accidents prediction model generation apparatus 2 may be downloaded to buried piping probability-of-water-leakage-accidents prediction model generation apparatus 2 through the Internet or an intranet.

Although the example of realizing the function of buried piping probability-of-water-leakage-accidents prediction model generation apparatus 2 by executing the program by a general-purpose computer (processor 202) is described in the present embodiment, the present disclosure is not limited thereto. All or some of the function of buried piping probability-of-water-leakage-accidents prediction model generation apparatus 2 may be realized by using an integrated circuit such as an application specific integrated circuit (ASIC) or a field-programmable gate array (FPGA).

<Functional Configuration>

A functional configuration of buried piping probability-of-water-leakage-accidents prediction model generation apparatus 2 will be described with reference to Fig. 3. Buried piping probability-of-water-leakage-accidents prediction model generation apparatus 2 includes a storage unit 10 and a buried piping probability-of-water-leakage-accidents prediction model generation unit 16.

<Storage Unit 10>

Storage unit 10 is implemented, for example, by at least one of storage 210 (see Fig. 2) or storage medium 208 (see Fig. 2). Referring to Fig. 3, storage unit 10 includes a reference piping data storage unit 11, a buried piping probability-of-water-leakage-accidents prediction model storage unit 12, a corrosion lag time storage unit 13, and a program storage unit 14.

Referring to Fig. 3, reference piping data 20 (see Fig. 4) is stored in reference piping data storage unit 11. Reference piping data 20 is examination data of a plurality of pieces of reference piping acquired by performing exploratory excavation of a plurality of pieces of reference piping in a plurality of places. The reference piping is, for example, water piping. The reference piping is buried in the ground. Reference piping data 20 includes, for example, examination data of pieces of reference piping at about 5000 points all over Japan. Reference piping data 20 may be provided from a customer or may be acquired by examining a region specified by the customer by a user of buried piping probability-of-water-leakage-accidents prediction system 1 or buried piping probability-of-water-leakage-accidents prediction model generation apparatus 2.

As shown in Fig. 4, reference piping data 20 includes a pipeline ID, a burial environment, a burial period of time $T_{ref}$, a reference corrosion depth, a material, a nominal pipe wall thickness, a pipeline length, and the number of water leakage accidents per unit time (e.g., 5 years) of the reference piping. The pipeline ID, the burial environment, burial period of time $T_{ref}$, the reference corrosion depth, the nominal pipe wall thickness, the pipeline length, and the number of water leakage accidents per unit time are associated with each other. Burial period of time $T_{ref}$ is a period of time for which the reference piping is buried. The reference corrosion depth is a corrosion depth of the reference piping. Ductile piping or cast iron piping can be exemplified as the material of the piping. The nominal pipe wall thickness of the piping is a standard pipe wall thickness of the piping. The pipeline length is a length of the piping specified by the pipeline ID. The number of water leakage accidents per unit time is the number of water leakage accidents that occur in the piping per unit time.

The burial environment is a type of soil in which the piping is buried. The burial environment is classified into four burial environments A, B, C, and D, depending on a type of soil and a soil resistivity. Burial environment A is a soil type having a soil resistivity of less than 1500 Ω•cm. Burial environment B is an argilliferous soil type having a soil resistivity of equal to or more than 1500 Ω•cm. Burial environment C is a silty soil type having a soil resistivity of equal to or more than 1500 Ω•cm. Burial environment D is a sandy soil type having a soil resistivity of equal to or more than 1500 Ω•cm.

For the following two reasons, the inventors of the present disclosure have classified the burial environment of the piping into four burial environments A, B, C, and D. The first reason is that the inventors of the present disclosure have found that there is a statistically meaningful difference in a relationship between the corrosion depth of the piping and four burial environments A to D. The second reason is that the number of reference piping data 20 having four burial environments A to D accounts for the majority (80% or more) of the total number of collected reference piping data 20 and generating buried piping probability-of-water-leakage-accidents prediction model 6 for each of four burial environments A to D is found to be useful.

Referring to Fig. 3, buried piping probability-of-water-leakage-accidents prediction model 6 is stored in buried piping probability-of-water-leakage-accidents prediction model storage unit 12. Buried piping probability-of-water-leakage-accidents prediction model 6 includes exceedance-probability-of-pipe-wall-thickness prediction model 21 (Figs. 5 and 6) and conversion coefficient 23 (Fig. 7).

Exceedance-probability-of-pipe-wall-thickness prediction model 21 is generated in accordance with the burial environment and the nominal pipe wall thickness of the piping. The exceedance probability of pipe wall thickness is a probability of the corrosion depth of the piping exceeding the nominal pipe wall thickness of the piping. Exceedance-probability-of-pipe-wall-thickness prediction model 21 provides the exceedance probability of pipe wall thickness of the piping that continuously changes with a continuous change in the burial period of time of the piping. Exceedance-probability-of-pipe-wall-thickness prediction model 21 is a model that predicts the exceedance probability of pipe wall thickness in an arbitrary burial period of time of the piping within a predetermined range (e.g., a range from 0 year to 70 years).

An example of a data structure of exceedance-probability-of-pipe-wall-thickness prediction model 21 will be described with reference to Fig. 5. Data of exceedance-probability-of-pipe-wall-thickness prediction model 21 includes the burial environment, the nominal pipe wall thickness and exceedance-probability-of-pipe-wall-thickness prediction model 21. The burial environment, the nominal pipe wall thickness and exceedance-probability-of-pipe-wall-thickness prediction model 21 are associated with each other.

Fig. 6 shows four exceedance-probability-of-pipe-wall-thickness prediction models as an example of exceedance-probability-of-pipe-wall-thickness prediction model 21. Specifically, Fig. 6 shows the exceedance-probability-of-pipe-wall-thickness prediction model for piping having a nominal pipe wall thickness of 7.5 mm and buried in burial environment A, the exceedance-probability-of-pipe-wall-thickness prediction model for piping having a nominal pipe wall thickness of 7.5 mm and buried in burial environment B, the exceedance-probability-of-pipe-wall-thickness prediction model for piping having a nominal pipe wall thickness of 7.5 mm and buried in burial environment C, and the exceedance-probability-of-pipe-wall-thickness prediction model for piping having a nominal pipe wall thickness of 7.5 mm and buried in burial environment D.

Referring to Fig. 7, conversion coefficient 23 of the present embodiment is a coefficient that converts the exceedance probability of pipe wall thickness into a probability of water leakage accidents. A plurality of conversion coefficients 23 may be stored in buried piping probability-of-water-leakage-accidents prediction model storage unit 12, depending on the material of the piping. The plurality of conversion coefficients 23 include, for example, a conversion coefficient p for ductile piping, and a conversion coefficient q for cast iron piping.

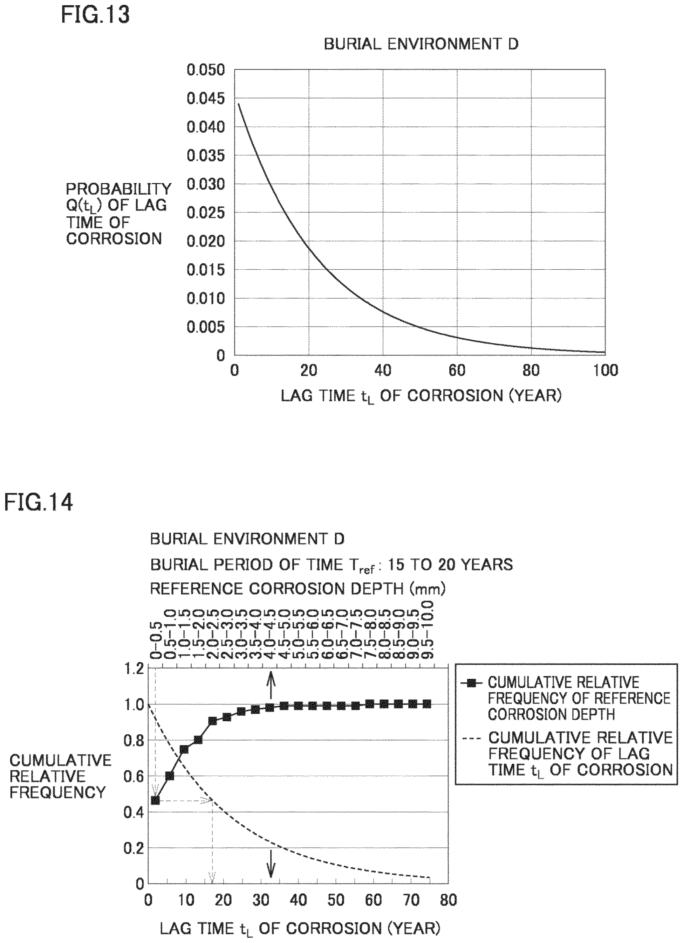

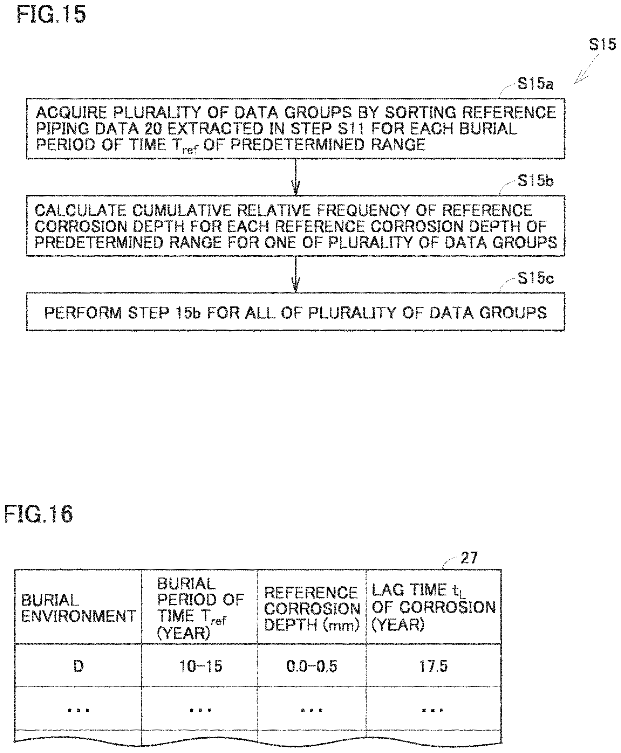

Referring to Fig. 3, a probability $Q(t_L)$ of a lag time of corrosion (see Fig. 13), a cumulative relative frequency of a lag time $t_L$ of corrosion (see Fig. 14), and data of lag time $t_L$ of corrosion (see Fig. 16) are stored in corrosion lag time storage unit 13.

Referring to Fig. 3, the program (e.g., buried piping probability-of-water-leakage-accidents prediction model generation program 26) for realizing the function of buried piping probability-of-water-leakage-accidents prediction model generation apparatus 2 is stored in program storage unit 14.

<Buried Piping Probability-of-Water-Leakage-Accidents Prediction Model Generation Unit 16>

Referring to Fig. 3, buried piping probability-of-water-leakage-accidents prediction model generation unit 16 is implemented by executing buried piping probability-of-water-leakage-accidents prediction model generation program 26 stored in program storage unit 14 by processor 202 (see Fig. 2). Buried piping probability-of-water-leakage-accidents prediction model generation unit 16 generates buried piping probability-of-water-leakage-accidents prediction model 6 (see Fig. 3) from reference piping data 20 (see Fig. 4). Buried piping probability-of-water-leakage-accidents prediction model generation unit 16 includes an exceedance-probability-of-pipe-wall-thickness prediction model generation unit 17 and a conversion coefficient calculation unit 18.

(Exceedance-Probability-of-Pipe-Wall-Thickness Prediction Model Generation Unit 17)

Exceedance-probability-of-pipe-wall-thickness prediction model generation unit 17 shown in Fig. 3 generates exceedance-probability-of-pipe-wall-thickness prediction model 21 (see Figs. 5 and 6) from reference piping data 20 (see Fig. 4).

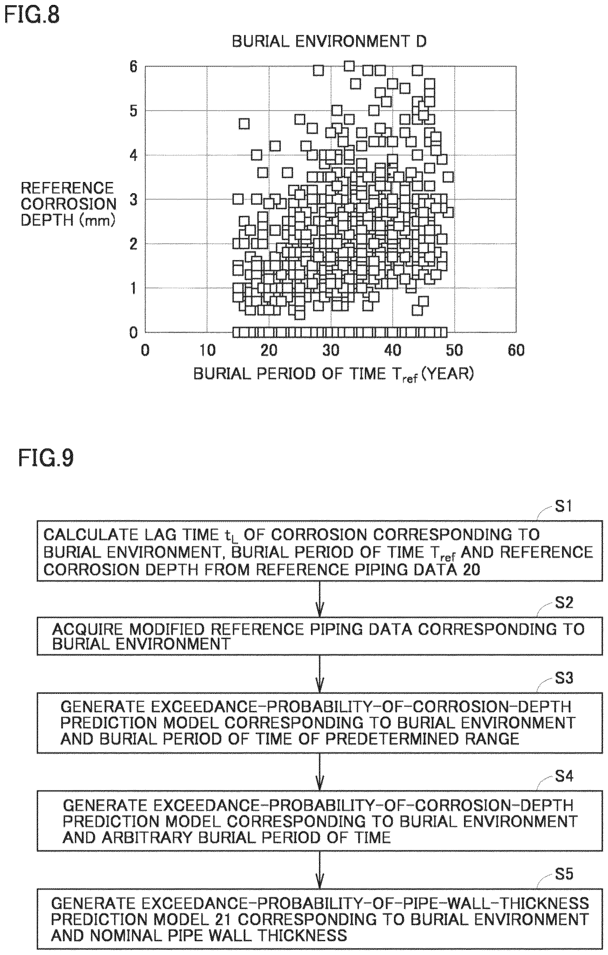

A method by which exceedance-probability-of-pipe-wall-thickness prediction model generation unit 17 generates exceedance-probability-of-pipe-wall-thickness prediction model 21 from reference piping data 20 will be described with reference to Figs. 8 to 22.

Fig. 8 shows reference piping data 20 of burial environment D, which is a part of reference piping data 20 (see Fig. 4). It can be understood that reference piping data 20 includes a large number of data with a reference corrosion depth of 0 mm and there is great variation in the data. Therefore, it is difficult to construct buried piping probability-of-water-leakage-accidents prediction model 6 capable of accurately predicting the probability of water leakage accidents of the buried piping by directly using reference piping data 20.

The inventors of the present disclosure have conceived that reference piping data 20 includes a large number of data with a reference corrosion depth of 0 mm and there is great variation in the data due to a coating film formed on an outer surface of the piping. In other words, the corrosion of the piping starts for the first time after the corrosion passes through the coating film. The inventors of the present disclosure have conceived that reference piping data 20 includes a large number of data with a reference corrosion depth of 0 mm because there is time from when the piping is buried to when the piping starts corroding (hereinafter referred to as "lag time $t_L$ of corrosion").

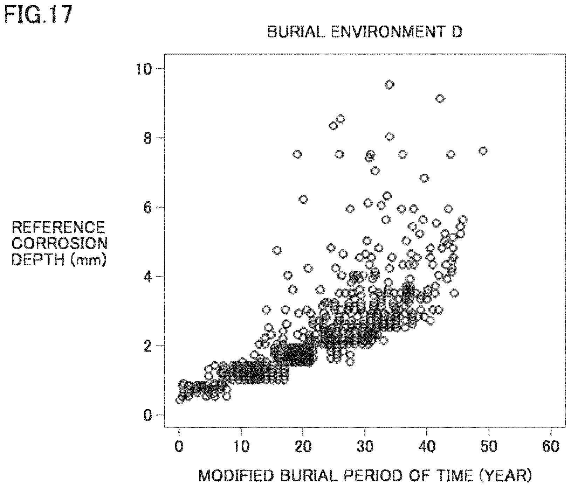

Lag time $t_L$ of corrosion depends mainly on the burial environment of the piping and a thickness and a material of the coating film. It is conceived that lag time $t_L$ of corrosion depending on the burial environment of the piping and the thickness and the material of the coating film is statistically related to the burial environment, the burial period of time and the corrosion depth of the piping. Thus, the inventors of the present disclosure have conceived to modify reference piping data 20 using lag time $t_L$ of corrosion (see Fig. 16) corresponding to the burial environment, the burial period of time and the corrosion depth of the piping, which is estimated by a statistical method, thereby generating modified reference piping data (see Fig. 17), and generate exceedance-probability-of-pipe-wall-thickness prediction model 21 (see Figs. 5 and 6) based on the modified reference piping data.

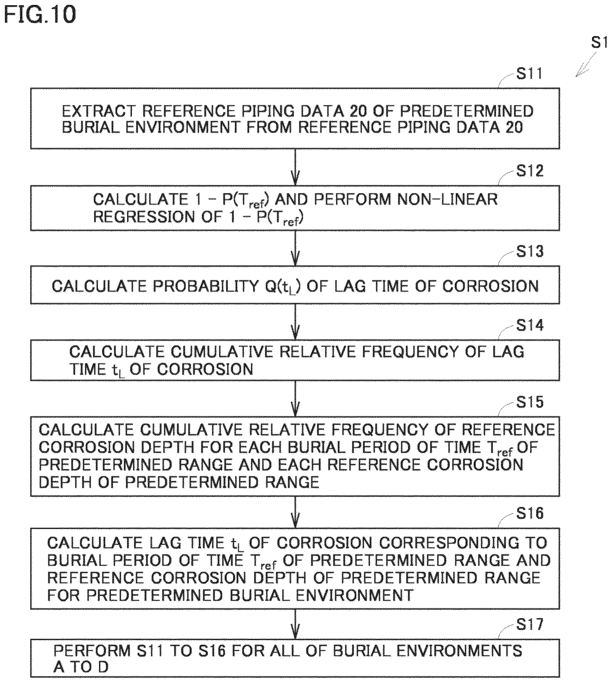

Referring to Fig. 9, exceedance-probability-of-pipe-wall-thickness prediction model generation unit 17 calculates lag time $t_L$ of corrosion corresponding to the burial environment, the burial period of time and the reference corrosion depth from reference piping data 20 (see Fig. 4) (step S1). One example of step S1 will be described with reference to Fig. 10.

Referring to Fig. 10, exceedance-probability-of-pipe-wall-thickness prediction model generation unit 17 extracts, from reference piping data 20 (see Fig. 4) stored in reference piping data storage unit 11 (see Fig. 3), reference piping data 20 of a predetermined burial environment (e.g., burial environment D) selected from burial environments A, B, C, and D (step S11).

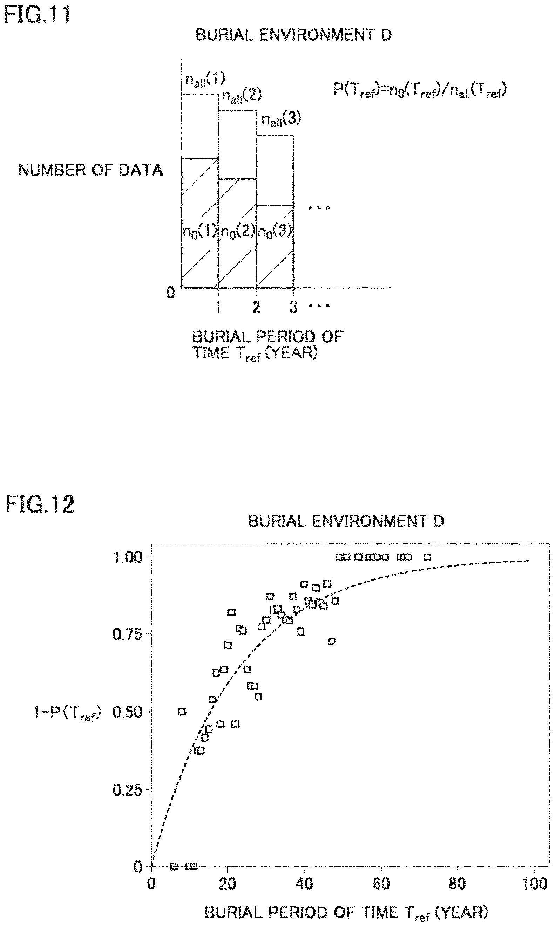

Referring to Fig. 10, exceedance-probability-of-pipe-wall-thickness prediction model generation unit 17 calculates, for reference piping data 20 extracted in step S11, a rate $1 - P(T_{ref})$ (see Fig. 12) of the number of data with the reference corrosion depth that is more than 0 mm for each burial period of time $T_{ref}$, and performs non-linear regression of $1 - P(T_{ref})$ (step S12).

As shown in Fig. 11, $P(T_{ref})$ is a rate of the number of data with the reference corrosion depth of 0 mm for each burial period of time $T_{ref}$ of a predetermined range (e.g., 1 year). Specifically, exceedance-probability-of-pipe-wall-thickness prediction model generation unit 17 counts a total number of data $n_{all}(T_{ref})$ for each burial period of time $T_{ref}$ of the predetermined range and the number of data $n_0(T_{ref})$ with the reference corrosion depth of 0 mm for each burial period of time $T_{ref}$ of the predetermined range. Exceedance-probability-of-pipe-wall-thickness prediction model generation unit 17 calculates rate $P(T_{ref})$ of $n_0(T_{ref})$ to $n_{all}(T_{ref})$. $P(T_{ref})$ is given by $n_0(T_{ref})/n_{all}(T_{ref})$. Exceedance-probability-of-pipe-wall-thickness prediction model generation unit 17 calculates $1 - P(T_{ref})$.

As shown in Fig. 12, $1 - P(T_{ref})$ asymptotically approaches 1 from zero in a non-linear manner as burial period of time $T_{ref}$ increases. Therefore, $1 - P(T_{ref})$ is regressed with use of a non-linear regression model. Examples of the non-linear regression model include an exponential distribution model, a fractional function model or the like. One example of the exponential distribution model is an exponential distribution model expressed by Expression (1). $\alpha$ is a coefficient determined by regression. One example of the fractional function model is a linear fractional function model expressed by Expression (2). $\beta$ and $\gamma$ are coefficients determined by regression. In the present embodiment, exceedance-probability-of-pipe-wall-thickness prediction model generation unit 17 calculates coefficient $\alpha$ by performing non-linear regression of $1 - P(T_{ref})$ by the exponential distribution model expressed by Expression (1) below with use of a least squares method and the like.

$$1 - P(T_{ref}) = 1 - 1 \times \exp(-\alpha T_{ref}) \qquad (1)$$

$$1 - P(T_{ref}) = \beta T_{ref}/(1 + \gamma T_{ref}) \qquad (2)$$

The change rate of $1 - P(T_{ref})$, in other words, a differential value of $1 - P(T_{ref})$ is a rate of the reference piping that starts corroding in burial period of time $T_{ref}$ out of the reference piping buried in the burial environment selected in step S11. The rate of the reference piping that starts corroding in burial period of time $T_{ref}$ is a rate of the reference piping of which lag time $t_L$ of corrosion is burial period of time $T_{ref}$ out of the reference piping buried in the burial environment selected in step S11. In other words, the differential value of $1 - P(T_{ref})$ is probability $Q(T_{ref})$ of the lag time of corrosion in the burial environment selected in step S11. Probability $Q(T_{ref})$ of the lag time of corrosion in the burial environment selected in step S11 is a probability of lag time $t_L$ of corrosion being burial period of time $T_{ref}$ out of lag time $t_L$ of corrosion of all of the pieces of reference piping buried in the burial environment selected in step S11.

Referring to Fig. 10, exceedance-probability-of-pipe-wall-thickness prediction model generation unit 17 calculates probability $Q(t_L)$ of the lag time of corrosion (see Fig. 13) (step S13). Specifically, exceedance-probability-of-pipe-wall-thickness prediction model generation unit 17 calculates a differential curve of a regression curve of $1 - P(T_{ref})$ (see Fig. 12). Exceedance-probability-of-pipe-wall-thickness prediction model generation unit 17 normalizes the differential curve such that an area of a region sandwiched by the differential curve and a straight line of Q = 0 is equal to 1. Thus, exceedance-probability-of-pipe-wall-thickness prediction model generation unit 17 calculates probability $Q(t_L)$ of the lag time of corrosion (see Fig. 13). Exceedance-probability-of-pipe-wall-thickness prediction model generation unit 17 outputs probability $Q(t_L)$ of the lag time of corrosion to corrosion lag time storage unit 13 (see Fig. 3). Probability $Q(t_L)$ of the lag time of corrosion is stored in corrosion lag time storage unit 13.

Referring to Fig. 10, exceedance-probability-of-pipe-wall-thickness prediction model generation unit 17 calculates a cumulative relative frequency of lag time $t_L$ of corrosion (see Fig. 14) from probability $Q(t_L)$ of the lag time of corrosion (step S14). For example, the cumulative relative frequency of lag time $t_L$ of corrosion of n years is a cumulative sum of a relative frequency of lag time $t_L$ of corrosion of which lag time $t_L$ of corrosion is n years or more and is given by a sum of probability $Q(t_L)$ of the lag time of corrosion of which lag time $t_L$ of corrosion is n years or more. Exceedance-probability-of-pipe-wall-thickness prediction model generation unit 17 calculates the sum of probability $Q(t_L)$ of the lag time of corrosion of which lag time $t_L$ of corrosion is n years or more as a cumulative relative frequency of lag time $t_L$ of corrosion = n years. Exceedance-probability-of-pipe-wall-thickness prediction model generation unit 17 outputs the cumulative relative frequency of lag time $t_L$ of corrosion to corrosion lag time storage unit 13. The cumulative relative frequency of lag time $t_L$ of corrosion is stored in corrosion lag time storage unit 13.

Exceedance-probability-of-pipe-wall-thickness prediction model generation unit 17 calculates a cumulative relative frequency of the reference corrosion depth (see Fig. 14) for each burial period of time $T_{ref}$ of a predetermined range and each reference corrosion depth of a predetermined range from reference piping data 20 relating to the burial environment selected in step S11 (step S15). The cumulative relative frequency of the reference corrosion depth of the predetermined range is a cumulative sum of a relative frequency of a reference corrosion depth of the predetermined range or less.

Specifically, as shown in Fig. 15, exceedance-probability-of-pipe-wall-thickness prediction model generation unit 17 acquires a plurality of data groups by sorting reference piping data 20 extracted in step S11 for each burial period of time $T_{ref}$ of the predetermined range (step S15a). Exceedance-probability-of-pipe-wall-thickness prediction model generation unit 17 acquires a plurality of data groups by sorting reference piping data 20 relating to the burial environment selected in step S11 for each burial period of time $T_{ref}$ of 5 years, for example. The plurality of data groups include a data group having burial period of time $T_{ref}$ that is 15 years or more and less than 20 years, for example (see Fig. 14).

Exceedance-probability-of-pipe-wall-thickness prediction model generation unit 17 calculates a cumulative relative frequency of a reference corrosion depth for each reference corrosion depth of a predetermined range for one of the plurality of data groups (step S15b). The cumulative relative frequency of the reference corrosion depth of the predetermined range is the rate of the number of data having a reference corrosion depth of the predetermined range or less out of one of the plurality of data groups. Exceedance-probability-of-pipe-wall-thickness prediction model generation unit 17 calculates the rate of the number of data having a reference corrosion depth of the predetermined range or less out of one of the plurality of data groups as the cumulative relative frequency of the reference corrosion depth of the predetermined range.

For example, as shown in Fig. 14, exceedance-probability-of-pipe-wall-thickness prediction model generation unit 17 calculates a cumulative relative frequency of a reference corrosion depth for each reference corrosion depth of 0.5 mm for a data group having burial period of time $T_{ref}$ that is 15 years or more and less than 20 years. For example, a cumulative relative frequency of the reference corrosion depth that is 1.0 mm or more and less than 1.5 mm in a data group having burial period of time $T_{ref}$ that is 15 years or more and less than 20 years is the rate of the number of data having a reference corrosion depth that is 0 mm or more and less than 1.5 mm out of the data group. In other words, the cumulative relative frequency of the reference corrosion depth that is 1.0 mm or more and less than 1.5 mm in a data group having burial period of time $T_{ref}$ that is 15 years or more and less than 20 years is calculated as the rate of a sum of the number of data having the reference corrosion depth that is 0 mm or more and less than 0.5 mm, the number of data having the reference corrosion depth that is 0.5 mm or more and less than 1.0 mm, and the number of data having the reference corrosion depth that is 1.0 mm or more and less than 1.5 mm in the data group with respect to the total number of data in the data group.

Exceedance-probability-of-pipe-wall-thickness prediction model generation unit 17 performs step S15b for all of the plurality of data groups (step S15c). As a result, the cumulative relative frequency of the reference corrosion depth is calculated for each burial period of time $T_{ref}$ of the predetermined range (e.g., 5 years) and each reference corrosion depth of the predetermined range (e.g., 0.5 mm) regarding the burial environment selected in step S11.

In general, it is conceived that corrosion starts in a shorter period of time after the piping is buried, and lag time $t_L$ of corrosion becomes shorter as the corrosion depth of the piping becomes greater. Therefore, it is conceived that there is correlation between the cumulative relative frequency of lag time $t_L$ of corrosion and the cumulative relative frequency of the reference corrosion depth. Referring to Fig. 10, exceedance-probability-of-pipe-wall-thickness prediction model generation unit 17 calculates lag time $t_L$ of corrosion corresponding to burial period of time $T_{ref}$ of the predetermined range and the reference corrosion depth of the predetermined range from the cumulative relative frequency of lag time $t_L$ of corrosion calculated in step S14 and the cumulative relative frequency of the reference corrosion depth calculated in step S15 for the predetermined burial environment selected in step S11 (step S16).

Specifically, as indicated by thin dotted arrows in Fig. 14, exceedance-probability-of-pipe-wall-thickness prediction model generation unit 17 calculates lag time $t_L$ (e.g., 17.5 years) of corrosion with which the cumulative relative frequency of lag time $t_L$ of corrosion becomes equal to a cumulative relative frequency of a reference corrosion depth of a predetermined range (e.g., a corrosion depth that is 0.0 mm or more and less than 0.5 mm) in burial period of time $T_{ref}$ of a predetermined range (e.g., 15 years or more and less than 20 years) as lag time $t_L$ (e.g., 17.5 years) of corrosion corresponding to burial period of time $T_{ref}$ of the predetermined range (e.g., 15 years or more and less than 20 years) and the reference corrosion depth of the predetermined range (e.g., a corrosion depth that is 0.0 mm or more and less than 0.5 mm).

Referring to Fig. 10, exceedance-probability-of-pipe-wall-thickness prediction model generation unit 17 performs steps S11 to S16 for all of burial environments A to D (step S17). As a result, exceedance-probability-of-pipe-wall-thickness prediction model generation unit 17 calculates lag time $t_L$ of corrosion corresponding to the burial environment, burial period of time $T_{ref}$ and the reference corrosion depth from reference piping data 20 (see Fig. 4).

Referring to Fig. 16, exceedance-probability-of-pipe-wall-thickness prediction model generation unit 17 generates lag-time-of-corrosion data 27 including the burial environment, burial period of time $T_{ref}$, the reference corrosion depth, and lag time $t_L$ of corrosion. In lag-time-of-corrosion data 27, the burial environment, burial period of time $T_{ref}$,

the reference corrosion depth, and lag time $t_L$ of corrosion are associated with each other. Exceedance-probability-of-pipe-wall-thickness prediction model generation unit 17 outputs lag-time-of-corrosion data 27 to corrosion lag time storage unit 13 (see Fig. 3). Lag-time-of-corrosion data 27 is stored in corrosion lag time storage unit 13.

Referring to Fig. 9, exceedance-probability-of-pipe-wall-thickness prediction model generation unit 17 acquires modified reference piping data (see Fig. 17) corresponding to the burial environment (step S2). The modified reference piping data includes the burial environment, a modified burial period of time and the reference corrosion depth. Specifically, exceedance-probability-of-pipe-wall-thickness prediction model generation unit 17 reads out the burial environment, burial period of time $T_{ref}$, the reference corrosion depth, and lag time $t_L$ of corrosion from lag-time-of-corrosion data 27 (see Fig. 16) stored in corrosion lag time storage unit 13 (see Fig. 3). Exceedance-probability-of-pipe-wall-thickness prediction model generation unit 17 calculates the modified burial period of time by subtracting lag time $t_L$ of corrosion (see

Fig. 16) corresponding to the burial environment, burial period of time $T_{ref}$ and the reference corrosion depth from burial period of time $T_{ref}$ in reference piping data 20 (see Figs. 4 and 8). As a result, the modified reference piping data is acquired.

The modified reference piping data (see Fig. 17) is obtained by moving each of points in reference piping data 20 (see Fig. 4) in the left direction by lag time $t_L$ of corrosion corresponding to each of the points. It can be understood that the modified reference piping data is reduced in the variation in data as compared to reference piping data 20 (see Fig. 8). In the modified reference piping data shown in Fig. 17, data of which the reference corrosion depth is 0 mm is deleted. Exceedance-probability-of-pipe-wall-thickness prediction model generation unit 17 outputs the modified reference piping data to reference piping data storage unit 11 (see Fig. 3). The modified reference piping data is stored in reference piping data storage unit 11.

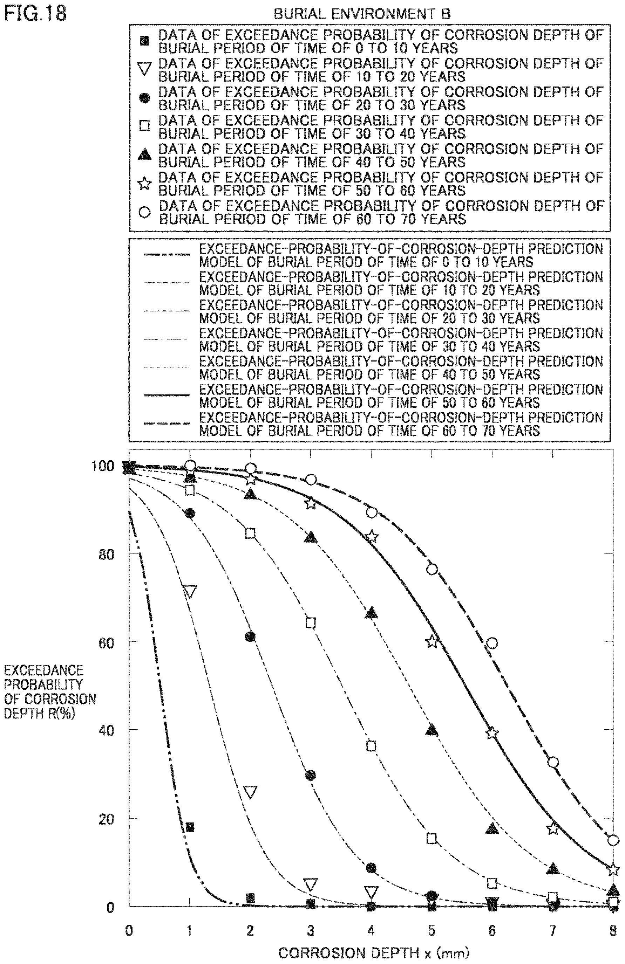

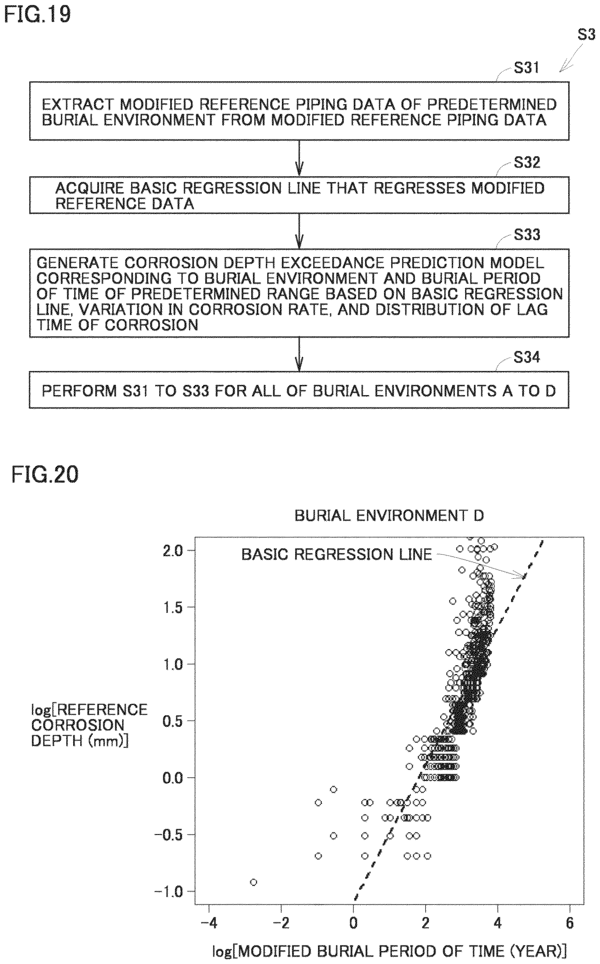

Referring to Fig. 9, exceedance-probability-of-pipe-wall-thickness prediction model generation unit 17 generates an exceedance-probability-of-corrosion-depth prediction model (see Fig. 18) corresponding to the burial environment and the burial period of time of the predetermined range (step S3). The exceedance probability of corrosion depth is a probability of the corrosion depth of the piping exceeding the predetermined depth. The exceedance-probability-of-corrosion-depth prediction model is a model that predicts the exceedance probability of corrosion depth in a predetermined burial environment and a burial period of time of a predetermined range. One example of step S3 of generating the exceedance-probability-of-corrosion-depth prediction model will be described with reference to Fig. 19.

Referring to Fig. 19, exceedance-probability-of-pipe-wall-thickness prediction model generation unit 17 extracts, from the modified reference piping data (see Fig. 17) stored in reference piping data storage unit 11 (see Fig. 3), reference piping data 20 of a predetermined burial environment (e.g., burial environment D) selected from burial environments A, B, C, and D (step S31).

Referring to Figs. 19 and 20, exceedance-probability-of-pipe-wall-thickness prediction model generation unit 17 acquires a basic regression line that regresses the modified reference piping data (step S32). As one example, the basic regression line is acquired by regressing the modified reference piping data by an exponential model expressed by Expression (3).

$$y = jt^k \qquad (3)$$

Here, y represents the reference corrosion depth of the reference piping, j and k represent coefficients, and t represents the modified burial period of time of the reference piping.

Specifically, a logarithm of the modified burial period of time and a logarithm of the reference corrosion depth are calculated, to thereby acquire log-log data of the modified reference piping data (see Fig. 20). Expression (4) is acquired as a double logarithmic expression of Expression (3).

$$\log y = \log j + k \times \log t \qquad (4)$$

A basic regression line is acquired by regressing log-log data of the modified reference piping data by Expression (4) with use of a least squares method (see Fig. 20).

Referring to Fig. 20, some of the modified reference piping data diverges from the basic regression line. The reason thereof is presumed to be due to (i) a variation in the corrosion rate of reference piping under a predetermined burial environment and (ii) a distribution of lag time $t_L$ of corrosion under a predetermined burial environment.

Referring to Fig. 19, exceedance-probability-of-pipe-wall-thickness prediction model generation unit 17 generates a corrosion depth exceedance prediction model corresponding to the burial environment and the burial period of time of the predetermined range based on the basic regression line, the variation in the corrosion rate, and the distribution of lag time $t_L$ of corrosion (step S33). For example, the corrosion depth exceedance prediction model is generated, considering that the basic regression line has a certain distribution for each of the corrosion rate and lag time $t_L$ of corrosion (e.g., the basic regression line is distributed at a certain probability density for each of the corrosion rate and lag time $t_L$ of corrosion).

The variation in the corrosion rate is mainly reflected in the distribution of the basic regression line due to the variation in the reference corrosion depth in the modified reference piping data. The distribution of the basic regression line is reflected in the distribution of coefficients j and k in Expression (3) or Expression (4). The distribution of the basic regression line due to the variation in the reference corrosion depth in the modified reference piping data may be expressed by the probability density function of the distribution of the basic regression line due to the variation in the reference corrosion depth in the modified reference piping data, for example.

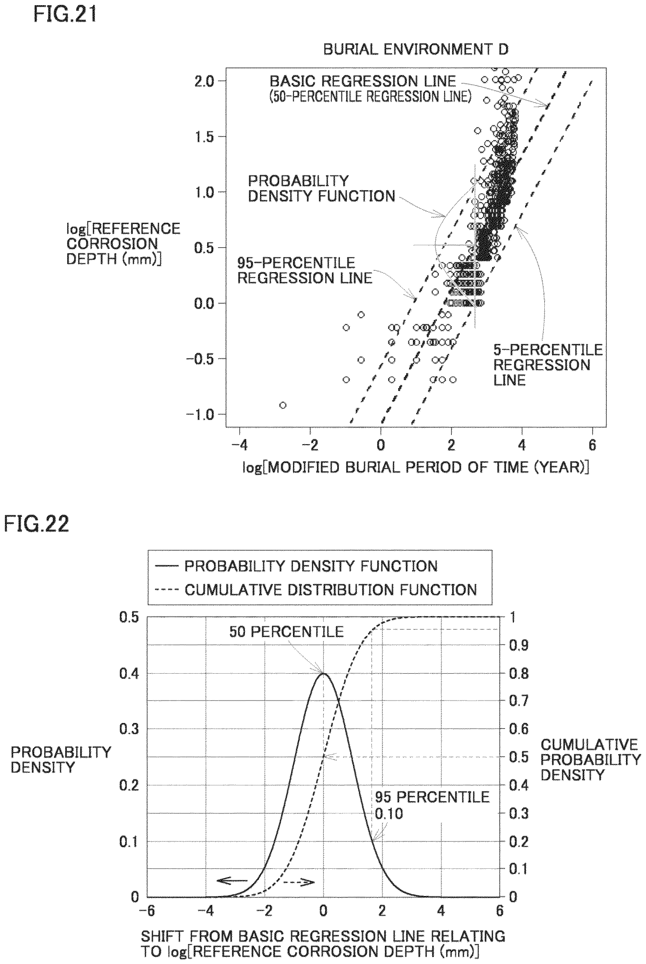

For example, referring to Figs. 21 and 22, it is assumed that the probability density function of the distribution of the basic regression line is a normal distribution. Exceedance-probability-of-pipe-wall-thickness prediction model generation unit 17 calculates, for each of log-log data of the modified reference piping data, a shift amount of log-log data of the modified reference piping data from the basic regression line and calculates a standard deviation $\sigma$ of the shift amount. The standard deviation of the probability density function is considered to be equal to calculated standard deviation $\sigma$. An integrated value of the probability density function across all of the shift amounts from the basic regression line is equal to 1 and is a normal distribution of standard deviation $\sigma$ of the probability density function, and hence exceedance-probability-of-pipe-wall-thickness prediction model generation unit 17 can calculate the probability density function of the distribution of the basic regression line.

Exceedance-probability-of-pipe-wall-thickness prediction model generation unit 17 integrates the probability density function of the distribution of the basic regression line from a shift amount of a negative infinity to a predetermined shift amount, to thereby calculate the cumulative distribution function of the distribution of the basic regression line in the predetermined shift amount.

The basic regression line is a regression line in which a value (cumulative probability density) of the cumulative distribution function of the distribution of the basic regression line is 50 percentile and is referred to as a 50-percentile regression line. A regression line in which a value (cumulative probability density) of the cumulative distribution function of the distribution of the basic regression line is p percentile is referred to as a p-percentile regression line. Exceedance-probability-of-pipe-wall-thickness prediction model generation unit 17 acquires a plurality of percentile regression lines from the basic regression line and the cumulative distribution function of the distribution of the basic regression line. The plurality of percentile regression lines include a 5-percentile regression line, a 6.25-percentile regression line, a 12.5-percentile regression line, an 18.75-percentile regression line, a 25-percentile regression line, a 31.25-percentile regression line, a 37.5-percentile regression line, a 43.75-percentile regression line, a 50-percentile regression line, a 56.25-percentile regression line, a 62.5-percentile regression line, a 68.75-percentile regression line, a 75-percentile regression line, an 81.25-percentile regression line, an 87.5-percentile regression line, a 93.75-percentile regression line, and a 95-percentile regression line, for example.

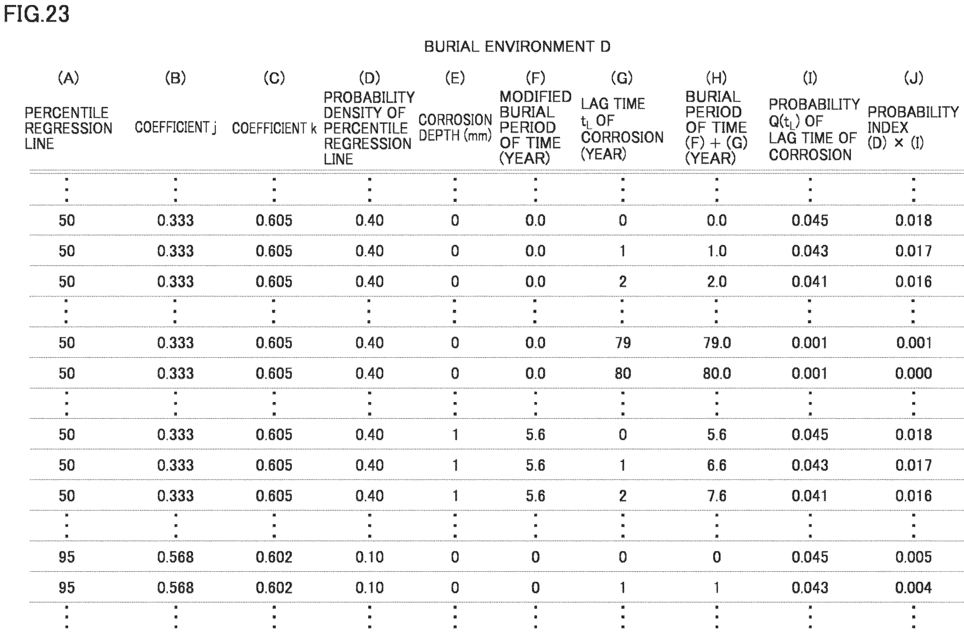

Exceedance-probability-of-pipe-wall-thickness prediction model generation unit 17 calculates coefficients j and k (see Items (B) and (C) in Fig. 23) of each of the percentile regression lines and a value (probability density) of the probability density function of each of the percentile regression lines (see Item (D) in Fig. 23) from the percentile regression lines and the probability density function of the distribution of the basic regression line.

Exceedance-probability-of-pipe-wall-thickness prediction model generation unit 17 converts the modified burial period of time of each of the percentile regression lines into the burial period of time of the piping based on the distribution of lag time $t_L$ of corrosion.

Specifically, exceedance-probability-of-pipe-wall-thickness prediction model generation unit 17 sets a predetermined depth (e.g., 0 mm or 1.0 mm) (see Item (E) in Fig. 23). Exceedance-probability-of-pipe-wall-thickness prediction model generation unit 17 calculates, for each of the percentile regression lines, a modified burial period of time (Item (F) in Fig. 23) when the corrosion depth of the piping is the predetermined depth. Exceedance-probability-of-pipe-wall-thickness prediction model generation unit 17 calculates the modified burial period of time corresponding to the predetermined depth by substituting the predetermined depth into reference corrosion depth y in Expression (3) or Expression (4) defining each of the percentile regression lines.

Due to the distribution of lag time $t_L$ of corrosion, the modified burial periods of time (see Item (F) in Fig. 23) from each of the percentile regression lines correspond to various burial periods of time of the piping. The distribution of lag time $t_L$ of corrosion may be expressed as a probability of the modified burial period of time corresponding to the burial period of time of the piping, for example. Thus, exceedance-probability-of-pipe-wall-thickness prediction model generation unit 17 calculates the probability of the modified burial period of time corresponding to the burial period of time of the piping.

Exceedance-probability-of-pipe-wall-thickness prediction model generation unit 17 sets lag time $t_L$ of corrosion (see Item (G) in Fig. 23) of a predetermined period of time (e.g., 1 year, 2 years), for example. Exceedance-probability-of-pipe-wall-thickness prediction model generation unit 17 calculates a sum of the modified burial period of time (see Item (F) in Fig. 23) and lag time $t_L$ of corrosion as the burial period of time of the piping (see Item (H) in Fig. 23). The probability of the modified burial period of time corresponding to the burial period of time of the piping is given by probability Q($t_L$) of lag time $t_L$ of corrosion (see Fig. 13) of the predetermined period of time. Exceedance-probability-of-pipe-wall-thickness prediction model generation unit 17 sets probability Q($t_L$) of the lag time of corrosion (see Fig. 13) stored in corrosion lag time storage unit 13 (see Fig. 3) to be the probability of the modified burial period of time corresponding to the burial period of time of the piping (see Item (I) in Fig. 23).

Exceedance-probability-of-pipe-wall-thickness prediction model generation unit 17 calculates a product of the probability density of the percentile regression line (see Item (D) in Fig. 23) and the probability of the modified burial period of time corresponding to the burial period of time of the piping, i.e., probability Q($t_L$) of the lag time of corrosion (see Item (I) in Fig. 23) as a probability index (see Item (J) in Fig. 23). This product is proportional to an existence probability of a percentile regression line having lag time $t_L$ of corrosion and can be considered to be a probability index of a percentile regression line having lag time $t_L$ of corrosion.

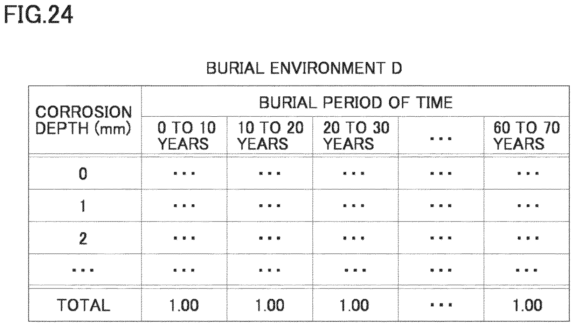

Exceedance-probability-of-pipe-wall-thickness prediction model generation unit 17 calculates a sum of the probability index (see Item (J) in Fig. 23) as a corrosion depth reaching probability index for each corrosion depth (see Item (E) in Fig. 23) and each burial period of time of a predetermined range (see Item (H) in Fig. 23). The corrosion depth reaching probability index is an index of a probability of reaching a predetermined corrosion depth in a burial period of time of a predetermined range. Then, exceedance-probability-of-pipe-wall-thickness prediction model generation unit 17 calculates a corrosion depth reaching probability by normalizing the corrosion depth reaching probability index such that a sum total of the corrosion depth reaching probability index across all corrosion depths becomes 1 in the burial period of time of the predetermined range. The corrosion depth reaching probability is a probability of reaching a predetermined corrosion depth in a burial period of time of a predetermined range. As a result, as shown in Fig. 24, exceedance-probability-of-pipe-wall-thickness prediction model generation unit 17 generates data indicating a relationship among the burial period of time of the predetermined range, the corrosion depth and the corrosion depth reaching probability (see Fig. 24) for the burial environment selected in step S31.

The corrosion depth reaching probability can be considered to be an exceedance probability of corrosion depth that is a probability of the corrosion depth exceeding a predetermined depth (e.g., 1.0 mm) in a burial period of time of a predetermined range. As a result, as shown in Fig. 18, exceedance-probability-of-pipe-wall-thickness prediction model generation unit 17 generates a relationship among the corrosion depth of the piping, the burial period of time of the piping of the predetermined range and the exceedance probability of corrosion depth (see the data of the exceedance probability of corrosion depth in Fig. 18) for the burial environment selected in step S31, based on the data shown in Fig. 24.

Exceedance-probability-of-pipe-wall-thickness prediction model generation unit 17 generates the exceedance-probability-of-corrosion-depth prediction model corresponding to the burial environment selected in step S31 and the burial period of time of the predetermined range by regressing the relationship among the corrosion depth of the piping, the burial period of time of the piping of the predetermined range and the exceedance probability of corrosion depth (see the data of the exceedance probability of corrosion depth in Fig. 18). The exceedance probability of corrosion depth is a probability of a first event out of the first event and a second event occurring. The first event is an event where the corrosion depth exceeds a predetermined depth in a burial period of time of a predetermined range, and the second event is an event where the corrosion depth does not exceed the predetermined depth in the burial period of time of the predetermined range. Therefore, non-linear regression of the exceedance probability of corrosion depth may be performed by a cumulative distribution function of binomial distribution. As one example, exceedance-probability-of-pipe-wall-thickness prediction model generation unit 17 calculates coefficients a and b by performing non-linear regression of the relationship among the corrosion depth, the burial period of time of the predetermined range and the exceedance probability of corrosion depth with Expression (5) below that is one of the cumulative distribution functions of the binomial distribution.

$$R = 100 \times \exp(a + bx)/(1 + \exp(a + bx)) \qquad (5)$$

R represents the exceedance probability of corrosion depth (%), a and b represent coefficients determined by regression, and x represents the corrosion depth.

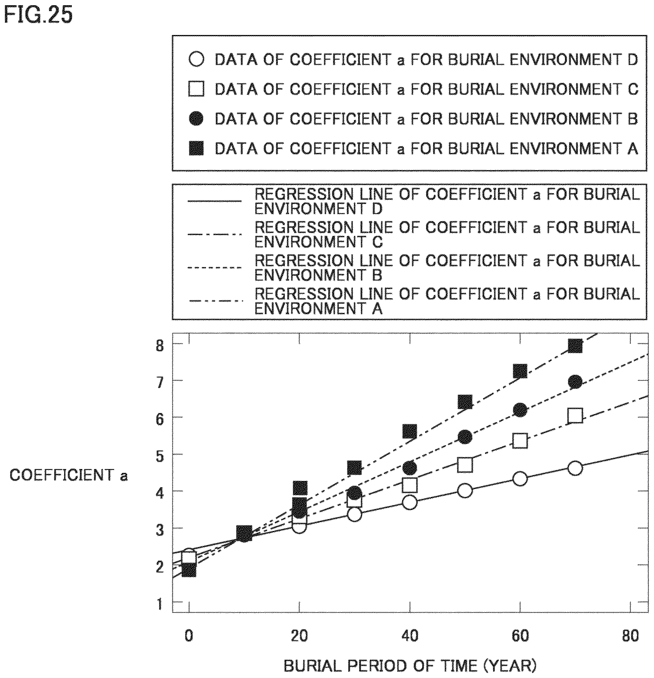

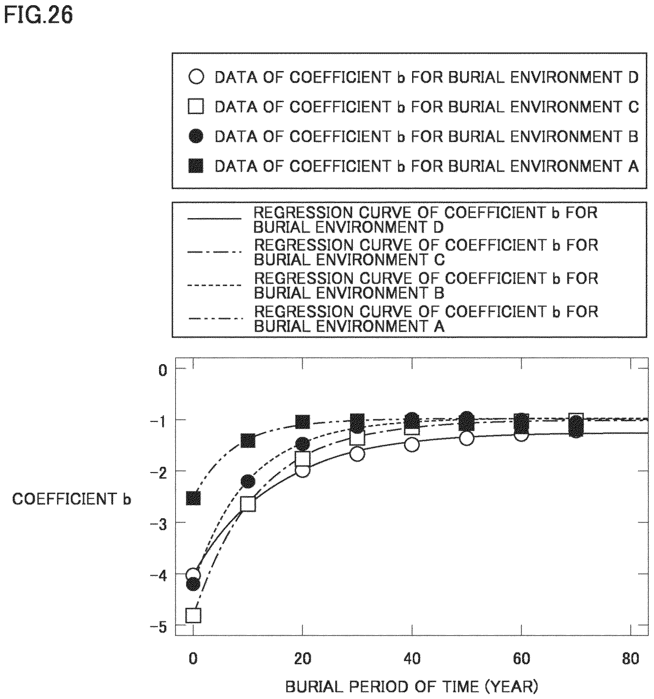

Referring to Fig. 19, exceedance-probability-of-pipe-wall-thickness prediction model generation unit 17 performs steps S31 to S33 for all of burial environments A to D (step S34). As a result, exceedance-probability-of-pipe-wall-thickness prediction model generation unit 17 generates the exceedance-probability-of-corrosion-depth prediction model (see Fig. 18) corresponding to the burial environment and the burial period of time of the predetermined range from reference piping data 20. The exceedance-probability-of-corrosion-depth prediction model generated in step S3 (see Fig. 9) includes Expression (5), for example. In step S3, coefficients a and b defining the exceedance-probability-of-corrosion-depth prediction model are determined for the burial environment and the burial period of time of the predetermined range (see data of coefficient a in Fig. 25 and data of coefficient b in Fig. 26).

Referring to Fig. 9, exceedance-probability-of-pipe-wall-thickness prediction model generation unit 17 generates the exceedance-probability-of-corrosion-depth prediction model corresponding to the burial environment and the arbitrary burial period of time (step S4). Specifically, as shown in Figs. 25 and 26, in step S4, exceedance-probability-of-pipe-wall-thickness prediction model generation unit 17 determines coefficients a and b for the burial environment of the piping and the arbitrary burial period of time of the piping by regressing coefficients a and b for the arbitrary burial period of time of the piping. As a result, the exceedance-probability-of-corrosion-depth prediction model corresponding to the burial environment and the arbitrary burial period of time is generated.

Coefficient a may be regressed by a linear model expressed by Expression (6) below, as shown in Fig. 25, for example.

$$a = c \times t + d \qquad (6)$$

t represents the burial period of time, and c and d represent coefficients determined by regression.

Coefficient b may be regressed by an asymptotic model expressed by Expression (7) below, as shown in Fig. 26, for example.

$$b = e - f \times \exp(-g \times t) \qquad (7)$$

t represents the burial period of time, and e, f and g represent coefficients determined by regression.

The exceedance-probability-of-corrosion-depth prediction model generated in step S4 includes Expression (5), Expression (6) and Expression (7), for example. In step S4, coefficients a and b defining the exceedance-probability-of-corrosion-depth prediction model are determined for the burial environment and the arbitrary burial period of time (see a regression line of coefficient a in Fig. 25 and a regression curve of coefficient b in Fig. 26).

Referring to Fig. 9, exceedance-probability-of-pipe-wall-thickness prediction model generation unit 17 generates exceedance-probability-of-pipe-wall-thickness prediction model 21 (see Fig. 6) corresponding to the burial environment and the nominal pipe wall thickness (step S5). When the corrosion depth of the piping reaches the nominal pipe wall thickness of the piping, a water leakage accident occurs in the piping. Thus, exceedance-probability-of-pipe-wall-thickness prediction model generation unit 17 generates exceedance-probability-of-pipe-wall-thickness prediction model 21 corresponding to the burial environment and the nominal pipe wall thickness by inputting the burial environment, the burial period of time and the nominal pipe wall thickness to the exceedance-probability-of-corrosion-depth prediction model generated in step S4.

For example, exceedance-probability-of-pipe-wall-thickness prediction model generation unit 17 acquires coefficients a and b for the burial environment and the burial period of time by inputting this burial environment and this burial period of time to Expression (6) and Expression (7) of the exceedance-probability-of-corrosion-depth prediction model acquired in step S4. Exceedance-probability-of-pipe-wall-thickness prediction model generation unit 17 calculates the exceedance probability of corrosion depth of Expression (5) as the exceedance probability of pipe wall thickness by inputting coefficients a and b and the nominal pipe wall thickness as the corrosion depth to Expression (5) of the exceedance-probability-of-corrosion-depth prediction model acquired in step S4. As a result, exceedance-probability-of-pipe-wall-thickness prediction model generation unit 17 generates exceedance-probability-of-pipe-wall-thickness prediction model 21 (see Fig. 6) corresponding to the burial environment and the nominal pipe wall thickness.

Exceedance-probability-of-pipe-wall-thickness prediction model generation unit 17 outputs exceedance-probability-of-pipe-wall-thickness prediction model 21 (see Fig. 6) to buried piping probability-of-water-leakage-accidents prediction model storage unit 12 (see Fig. 3). Exceedance-probability-of-pipe-wall-thickness prediction model 21 is stored in buried piping probability-of-water-leakage-accidents prediction model storage unit 12.

(Conversion Coefficient Calculation Unit 18)

Conversion coefficient calculation unit 18 (see Fig. 3) calculates conversion coefficient 23 (see Fig. 7) based on reference piping data 20 (see Fig. 4) and the exceedance probability of pipe wall thickness acquired from exceedance-probability-of-pipe-wall-thickness prediction model 21 (see Figs. 5 and 6). In the present embodiment, conversion coefficient 23 is a coefficient that converts the exceedance probability of pipe wall thickness of the piping into the probability of water leakage accidents of the piping.

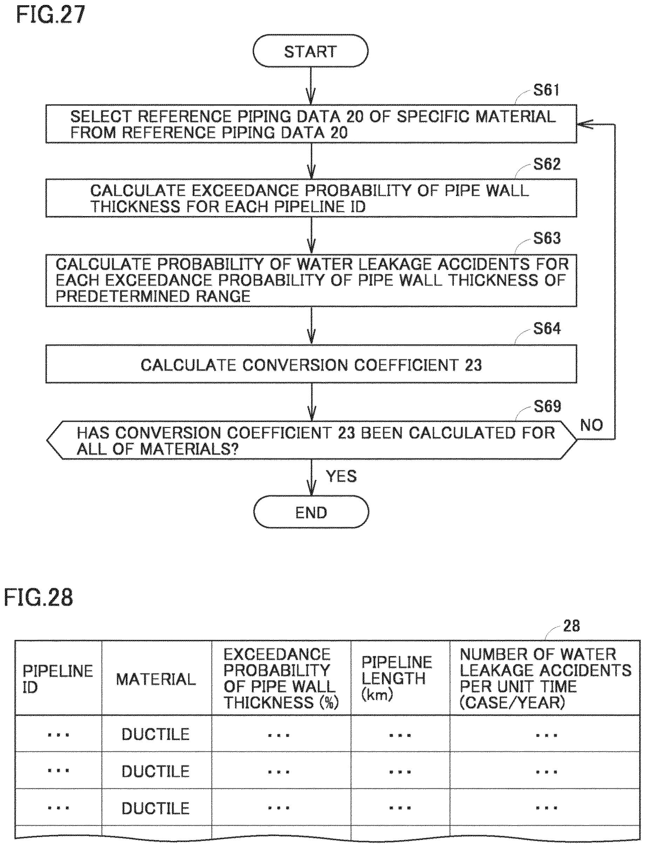

A method by which conversion coefficient calculation unit 18 calculates conversion coefficient 23 will be described with reference to Fig. 27.

Referring to Fig. 27, conversion coefficient calculation unit 18 selects reference piping data 20 of a specific material from reference piping data 20 (see Fig. 4) stored in reference piping data storage unit 11 (see Fig. 3) (step S61). For example, conversion coefficient calculation unit 18 selects reference piping data 20 of ductile piping from reference piping data 20.

Referring to Fig. 27, conversion coefficient calculation unit 18 calculates the exceedance probability of pipe wall thickness for each pipeline ID for reference piping data 20 selected in step S61 (step S62). Specifically, conversion coefficient calculation unit 18 reads out the burial environment, burial period of time $T_{ref}$ and the nominal pipe wall thickness of the reference piping having the specific material selected in S61 from reference piping data 20 (see Fig. 4) stored in reference piping data storage unit 11 (see Fig. 3). Conversion coefficient calculation unit 18 selects the exceedance-probability-of-pipe-wall-thickness model (see Figs. 5 and 6) corresponding to the burial environment and the nominal pipe wall thickness of the reference piping. Conversion coefficient calculation unit 18 calculates the exceedance probability of pipe wall thickness for each pipeline ID by inputting burial period of time $T_{ref}$ of the reference piping to the selected exceedance-probability-of-pipe-wall-thickness model.

Referring to Fig. 27, conversion coefficient calculation unit 18 calculates the probability of water leakage accidents for each exceedance probability of pipe wall thickness of the predetermined range (step S63).

Specifically, conversion coefficient calculation unit 18 generates, for the reference piping having the specific material selected in step S61, reference piping data for conversion coefficient calculation 28 (see Fig. 28) from the pipeline ID, burial period of time $T_{ref}$, the pipeline length, and the number of water leakage accidents per unit time (e.g., 5 years) in reference piping data 20 (see Fig. 4) stored in reference piping data storage unit 11 (see Fig. 3) and the exceedance probability of pipe wall thickness calculated for each pipeline ID in S62. Reference piping data for conversion coefficient calculation 28 includes the pipeline ID, the exceedance probability of pipe wall thickness, the pipeline length, and the number of water leakage accidents per unit time (e.g., 1 year). In reference piping data for conversion coefficient calculation 28, the pipeline ID, the exceedance probability of pipe wall thickness, burial period of time $T_{ref}$, the pipeline length, and the number of water leakage accidents per unit time are associated with each other.

When the unit time (e.g., 5 years) in reference piping data 20 (see Fig. 4) is different from the unit time (e.g., 1 year) in reference piping data for conversion coefficient calculation 28 (see Fig. 28), conversion coefficient calculation unit 18 reads out the number of water leakage accidents per unit time in reference piping data 20 from reference piping data storage unit 11 (see Fig. 3) and converts the number of water leakage accidents per unit time in reference piping data 20 into the number of water leakage accidents per unit time in reference piping data for conversion coefficient calculation 28. When the unit time in reference piping data 20 is the same as the unit time in reference piping data for conversion coefficient calculation 28, conversion coefficient calculation unit 18 reads out the number of water leakage accidents per unit time in reference piping data 20 from reference piping data storage unit 11 and sets the number of water leakage accidents per unit time in reference piping data 20 to be the number of water leakage accidents per unit time in reference piping data for conversion coefficient calculation 28. Reference piping data for conversion coefficient calculation 28 may further include the specific material selected in step S61.

Conversion coefficient calculation unit 18 divides reference piping data for conversion coefficient calculation 28 (see Fig. 28) into groups for each predetermined range of the exceedance probability of pipe wall thickness. The predetermined range of the exceedance probability of pipe wall thickness is, for example, equal to or larger than a range of the exceedance probability of pipe wall thickness of 1.5% and equal to or smaller than a range of the exceedance probability of pipe wall thickness of 4.0%. Therefore, each group has the sufficient number of data and the number of data of a relationship between the exceedance probability of pipe wall thickness and the probability of water leakage accidents, which is required to perform regression in step S64 described below, may be provided. Conversion coefficient 23 can be calculated with a higher degree of accuracy.

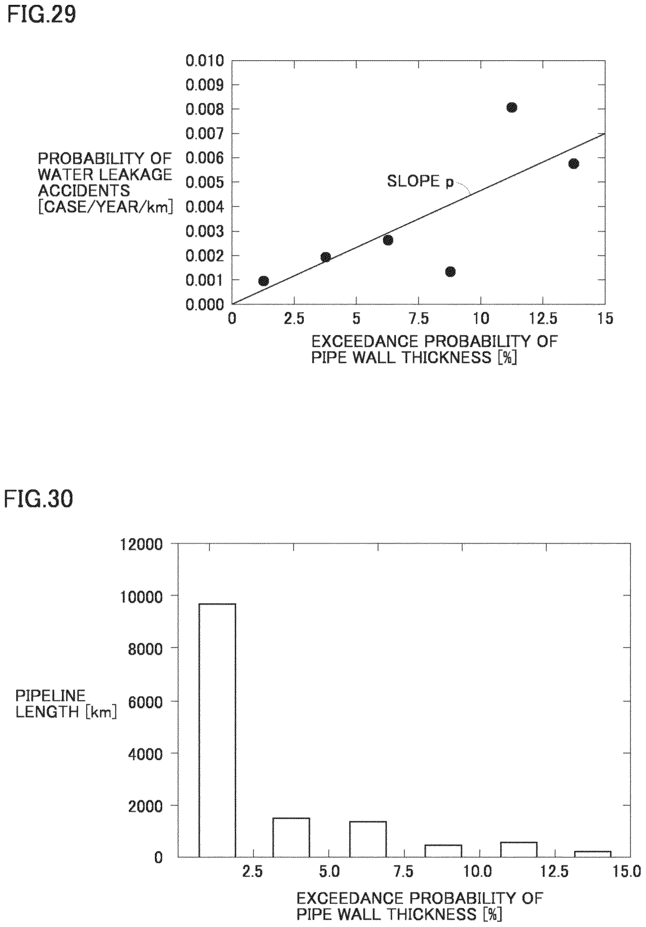

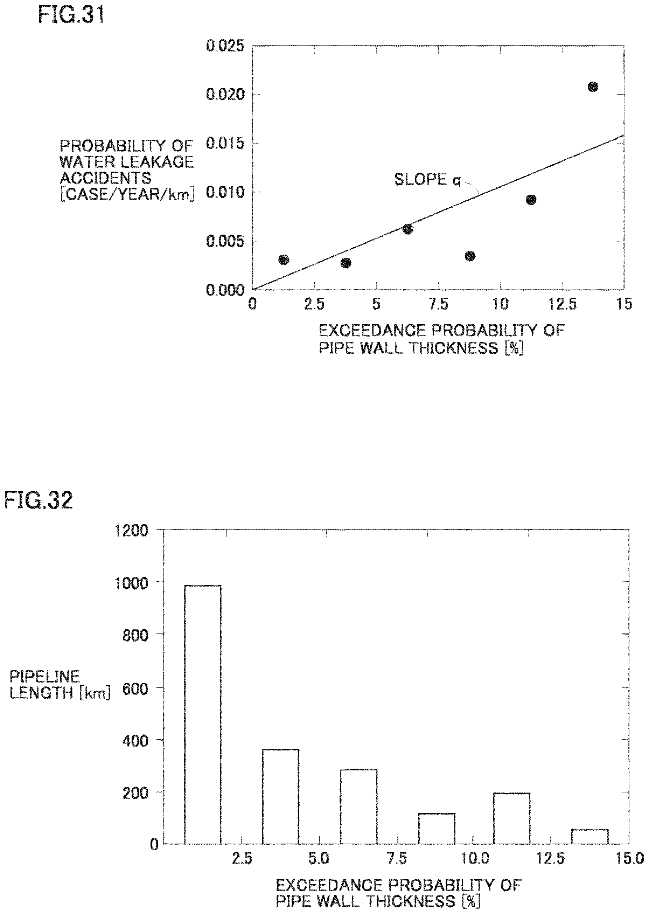

For example, conversion coefficient calculation unit 18 may divide reference piping data for conversion coefficient calculation 28 into groups for each range of the exceedance probability of pipe wall thickness of 2.5% for an example in which the specific material selected in step S61 is ductile (see Figs. 29 and 30). Conversion coefficient calculation unit 18 may divide reference piping data for conversion coefficient calculation 28 into groups for each range of the exceedance probability of pipe wall thickness of 2.5% for an example in which the specific material selected in step S61 is cast iron (see Figs. 31 and 32).

Conversion coefficient calculation unit 18 calculates the probability of water leakage accidents for each group. Specifically, conversion coefficient calculation unit 18 calculates a sum of the number of water leakage accidents per unit time of the pipelines included in each group as the number of water leakage accidents per unit time of each group. Conversion coefficient calculation unit 18 calculates a sum of the pipeline length as the pipeline length of each group for each group. Conversion coefficient calculation unit 18 calculates the probability of water leakage accidents of each group by dividing the number of water leakage accidents per unit time of each group by the pipeline length of each group. As a result, conversion coefficient calculation unit 18 acquires data of the relationship between the exceedance probability of pipe wall thickness and the probability of water leakage accidents (see the black points in Figs. 29 and 31).

Conversion coefficient calculation unit 18 calculates conversion coefficient 23 for the specific material selected in S61 from the data of the relationship between the exceedance probability of pipe wall thickness and the probability of water leakage accidents (step S64).

The unit of the exceedance probability of pipe wall thickness is percent and is a value that is not dependent on the pipeline length. The probability of water leakage accidents is also a value that is not dependent on the pipeline length, because the probability of water leakage accidents is normalized by the pipeline length. Therefore, it is conceived that the exceedance probability of pipe wall thickness is proportional to the probability of water leakage accidents. Thus, as shown in Figs. 29 and 31, conversion coefficient calculation unit 18 calculates, as conversion coefficient 23, a proportionality coefficient acquired by performing linear regression of the data of the relationship between the exceedance probability of pipe wall thickness and the probability of water leakage accidents, for example. A slope p of a regression line in Fig. 29 represents conversion coefficient 23 for ductile piping. A slope q of a regression line in Fig. 31 represents conversion coefficient 23 for cast iron piping.

As shown in Figs. 30 and 32, the pipeline length of each group becomes shorter as the exceedance probability of pipe wall thickness becomes higher. The reason thereof is that the number of reference piping data 20 included in each group becomes smaller as the exceedance probability of pipe wall thickness becomes higher. Therefore, the reliability of the data of the relationship between the exceedance probability of pipe wall thickness and the probability of water leakage accidents (see the black points in Figs. 29 and 31) becomes lower as the exceedance probability of pipe wall thickness becomes higher. Thus, conversion coefficient 23 may be calculated with a higher degree of accuracy by performing linear regression of the data of the relationship between the exceedance probability of pipe wall thickness and the probability of water leakage accidents for the exceedance probability of pipe wall thickness that is a predetermined value or less. A range of the exceedance probability of pipe wall thickness in which this linear regression is performed may be 20.0% or less, 17.5% or less, 15.0% or less (see Figs. 29 and 31), 12.5% or less, or 10.0% or less, for example.

Referring to Fig. 27, conversion coefficient calculation unit 18 determines whether conversion coefficient 23 has been calculated for all of the materials included in reference piping data 20 (see Fig. 4) stored in reference piping data storage unit 11 (see Fig. 3) (step S69). When conversion coefficient 23 has not been calculated for all of the materials, the process returns to S61 and conversion coefficient calculation unit 18 selects reference piping data 20 of a specific material for which conversion coefficient 23 has not yet been calculated and performs S62 to S64 again. When conversion coefficient 23 has been calculated for all of the materials, the calculation of conversion coefficient 23 ends. Conversion coefficient calculation unit 18 outputs the calculated conversion coefficient 23 to buried piping probability-of-water-leakage-accidents prediction model storage unit 12 (see Fig. 3). Conversion coefficient 23 is stored in buried piping probability-of-water-leakage-accidents prediction model storage unit 12.

Referring to Fig. 1, buried piping probability-of-water-leakage-accidents prediction model generation apparatus 2 transmits buried piping probability-of-water-leakage-accidents prediction model 6 (exceedance-probability-of-pipe-wall-thickness prediction model 21 and conversion coefficient 23) to buried piping probability-of-water-leakage-accidents prediction apparatus 3.

<Buried Piping Probability-of-Water-Leakage-Accidents Prediction Apparatus 3>

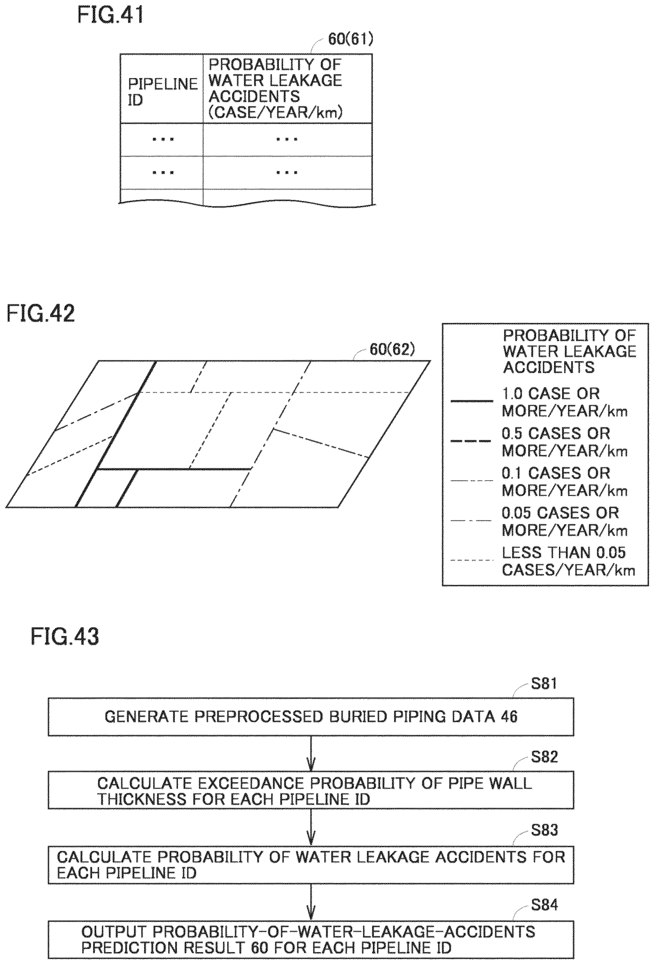

Referring to Figs. 1, 33 and 34, buried piping probability-of-water-leakage-accidents prediction apparatus 3 receives buried piping probability-of-water-leakage-accidents prediction model 6 from buried piping probability-of-water-leakage-accidents prediction model generation apparatus 2. Buried piping probability-of-water-leakage-accidents prediction apparatus 3 calculates a probability of water leakage accidents of buried piping (see Figs. 41 and 42) using buried piping probability-of-water-leakage-accidents prediction model 6.

<Hardware Configuration>

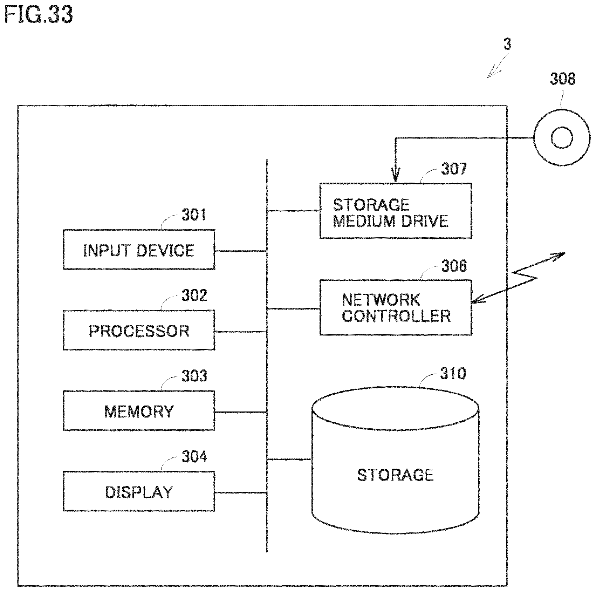

A hardware configuration of buried piping probability-of-water-leakage-accidents prediction apparatus 3 will be described with reference to Fig. 33. Buried piping probability-of-water-leakage-accidents prediction apparatus 3 includes an input device 301, a processor 302, a memory 303, a display 304, a network controller 306, a storage medium drive 307, and a storage 310.

Input device 301 accepts various types of input operations. Input device 301 is, for example, a keyboard, a mouse or a touch panel.

Display 304 displays information required for processing in buried piping probability-of-water-leakage-accidents prediction apparatus 3, and the like. Display 304 displays a probability-of-water-leakage-accidents prediction result 60 described below (see Fig. 41 or 42), for example. Display 304 is, for example, a liquid crystal display (LCD) or an organic electroluminescence (EL) display.

By executing a below-described program, processor 302 performs processing required to realize the function of buried piping probability-of-water-leakage-accidents prediction apparatus 3. Processor 302 is implemented, for example, by a CPU, a GPU or the like.

Memory 303 provides a storage area that temporarily stores a program code, a work memory or the like when processor 302 executes the program. Memory 303 is, for example, a volatile memory device such as a DRAM or an SRAM.

Network controller 306 receives and transmits a program or data to and from an arbitrary apparatus including buried piping probability-of-water-leakage-accidents prediction model generation apparatus 2 through communication network 4 (see Fig. 1). For example, network controller 306 receives buried piping probability-of-water-leakage-accidents prediction model 6 from buried piping probability-of-water-leakage-accidents prediction model generation apparatus 2 through communication network 4. Network controller 306 is in conformity with an arbitrary communication scheme such as, for example, Ethernet (registered trademark), a wireless LAN or Bluetooth (registered trademark).

Storage medium drive 307 is a device that reads out a program or data stored in a storage medium 308. Furthermore, storage medium drive 307 may be a device that writes a program or data to storage medium 308. Storage medium 308 is a non-transitory storage medium and stores the program or data in a non-volatile manner. Storage medium 308 is, for example, an optical storage medium such as an optical disk (e.g., a CD-ROM or a DVD-ROM), a semiconductor storage medium such as a flash memory or a USB memory, a magnetic storage medium such as a hard disk, an FD or a storage tape, or a magneto-optical storage medium such as an MO disk.

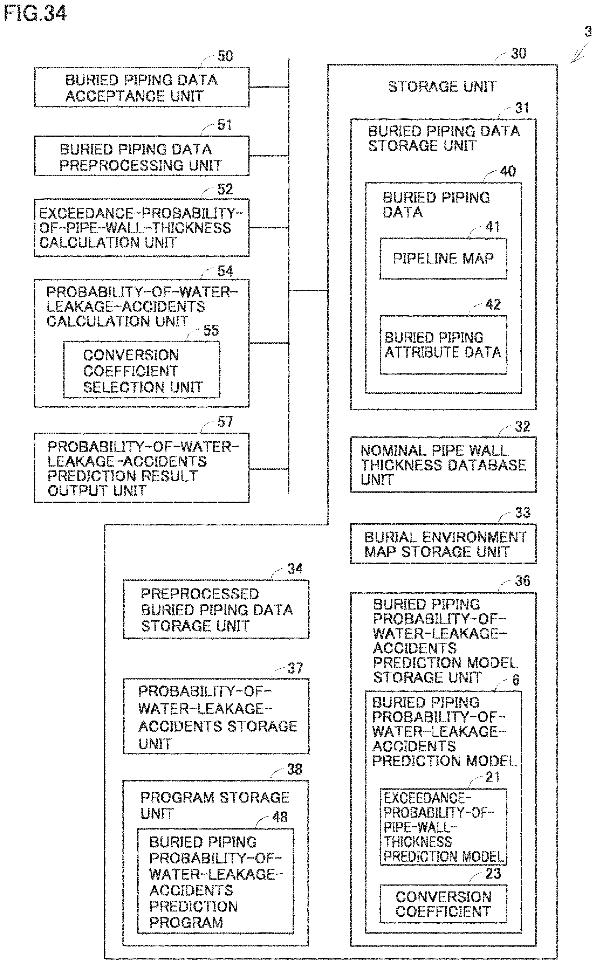

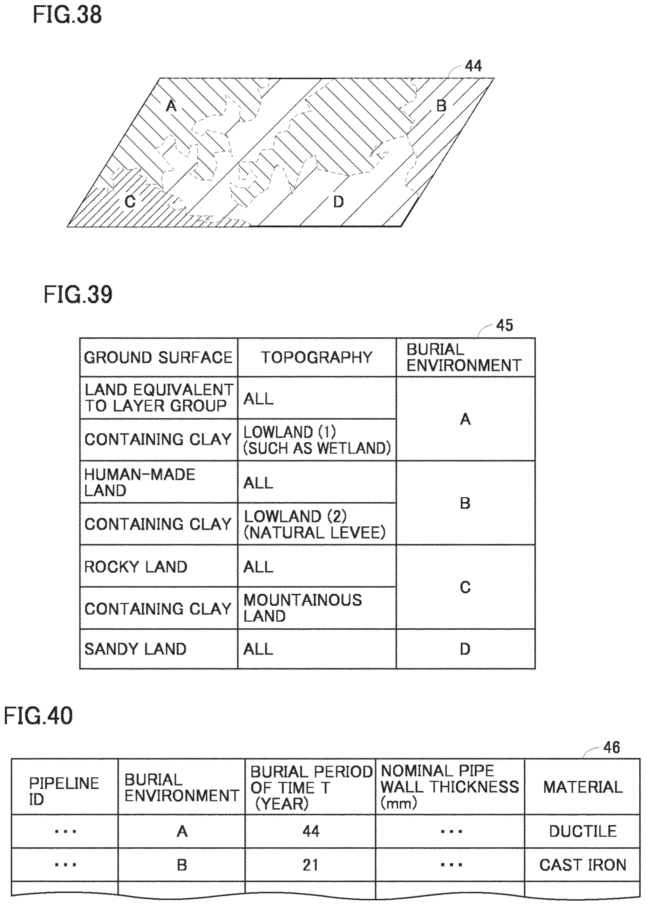

Storage 310 stores buried piping data 40 (see Figs. 34 to 36), preprocessed buried piping data 46 (see Fig. 40), buried piping probability-of-water-leakage-accidents prediction model 6 (see Fig. 34), the program executed in processor 302, and the like. This program includes a buried piping probability-of-water-leakage-accidents prediction program 48 (see Fig. 34). Buried piping probability-of-water-leakage-accidents prediction program 48 is a program for calculating the probability of water leakage accidents of the buried piping from buried piping data 40. Storage 310 is, for example, a non-volatile memory device such as a hard disk or an SSD.

The program for realizing the function of buried piping probability-of-water-leakage-accidents prediction apparatus 3 may be stored in non-transitory storage medium 308 and distributed, and be installed in storage 310. The program for realizing the function of buried piping probability-of-water-leakage-accidents prediction apparatus 3 may be downloaded to buried piping probability-of-water-leakage-accidents prediction apparatus 3 through the Internet or an intranet.

Although the example of realizing the function of buried piping probability-of-water-leakage-accidents prediction apparatus 3 by executing the program by a general-purpose computer (processor 302) is described in the present embodiment, the present disclosure is not limited thereto. All or some of the function of buried piping probability-of-water-leakage-accidents prediction apparatus 3 may be realized by using an integrated circuit such as an ASIC or an FPGA.

<Functional Configuration>

An example of a functional configuration of buried piping probability-of-water-leakage-accidents prediction apparatus 3 will be described with reference to Fig. 34. Buried piping probability-of-water-leakage-accidents prediction apparatus 3 includes a storage unit 30, a buried piping data acceptance unit 50, a buried piping data preprocessing unit 51, an exceedance-probability-of-pipe-wall-thickness calculation unit 52, a probability-of-water-leakage-accidents calculation unit 54, and a probability-of-water-leakage-accidents prediction result output unit 57.

<Storage Unit 30>

Storage unit 30 is implemented by at least one of storage 310 (see Fig. 33) or storage medium 308 (see Fig. 33). As shown in Fig. 34, storage unit 30 includes a buried piping data storage unit 31, a nominal pipe wall thickness database unit 32, a burial environment map storage unit 33, a preprocessed buried piping data storage unit 34, a buried piping probability-of-water-leakage-accidents prediction model storage unit 36, a probability-of-water-leakage-accidents storage unit 37, and a program storage unit 38.

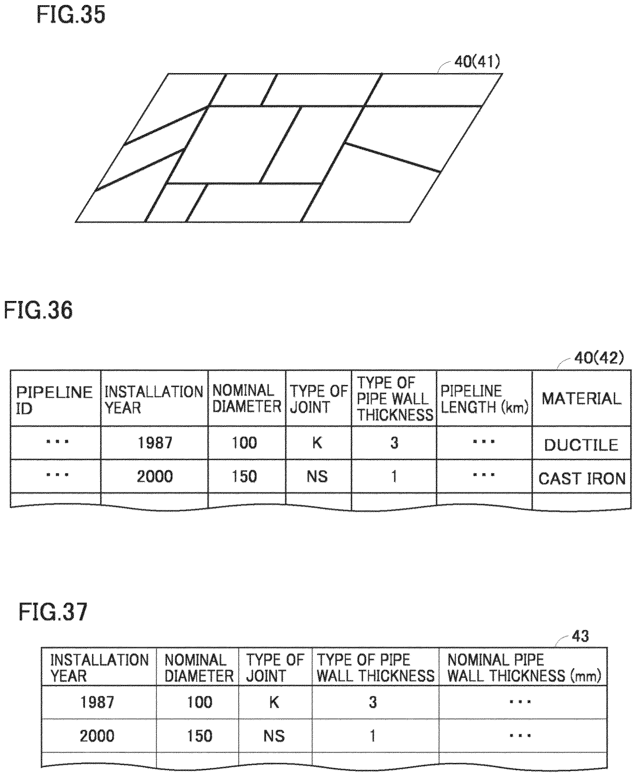

Referring to Fig. 34, data of the buried piping (hereinafter referred to as "buried piping data 40") accepted from the customer is stored in buried piping data storage unit 31. The buried piping is, for example, water piping. The buried piping is buried in the ground. Buried piping data 40 includes a pipeline map 41 (see Fig. 35) and buried piping attribute data 42 (see Fig. 36), for example.

As shown in Fig. 35, in pipeline map 41, the position of the buried piping is shown on a map for each pipeline ID of the buried piping.

Referring to Fig. 36, buried piping attribute data 42 includes a pipeline ID, an installation (burial) year, a nominal diameter, a type of joint, a type of the pipe wall thickness, a pipeline length, and a material of the buried piping. In buried piping attribute data 42, the pipeline ID, the installation (burial) year, the nominal diameter, the type of joint, the type of the pipe wall thickness, the pipeline length, and the material are associated with each other. The installation (burial) year of the buried piping is a year in which the buried piping is installed (buried). An A-type, a K-type, a T-type, an NS-type, or the like can be exemplified as the type of joint. Grade 1, grade 2, grade 3, or the like can be exemplified as the type of the pipe wall thickness. The pipeline length is a length of the piping specified by the pipeline ID. Ductile or cast iron can be exemplified as the material of the buried piping.

Referring to Fig. 34, nominal pipe wall thickness data 43 (see Fig. 37) including the installation year, the nominal diameter, the type of joint, the type of the pipe wall thickness, and the nominal pipe wall thickness of the piping is stored in nominal pipe wall thickness database unit 32. In nominal pipe wall thickness data 43, the installation year, the nominal diameter, the type of joint, the type of the pipe wall thickness, and the nominal pipe wall thickness of the piping are associated with each other. The nominal pipe wall thickness of the piping is a standard pipe wall thickness of the piping.

Referring to Fig. 34, a burial environment map 44 (see Fig. 38) is stored in burial environment map storage unit 33. Burial environment map 44 is a map indicating the positions of burial environments A, B, C, and D described above.

Burial environment map 44 may be generated from, for example, a generally available geological information map (not shown) and ground-burial environment correspondence data 45 (see Fig. 39). The geological information map is, for example, a land classification survey provided by a public organization or the like such as the Ministry of Land, Infrastructure, Transport and Tourism. In the geological information map, geological information (see Fig. 39) such as geological features and topography of the ground surface is shown on a map. The inventors of the present disclosure have found that regarding corrosion of the buried piping, there is a statistical correlation between burial environments A, B, C, and D of the buried piping and the geological information. Thus, the inventors of the present disclosure have generated ground-burial environment correspondence data 45 indicating the correspondence relationship between burial environments A, B, C, and D and the geological information. Burial environment map 44 is generated by applying ground-burial environment correspondence data 45 to the geological information map.

Referring to Fig. 34, below-described preprocessed buried piping data 46 (see Fig. 40) is stored in preprocessed buried piping data storage unit 34.

Referring to Fig. 34, buried piping probability-of-water-leakage-accidents prediction model 6 is stored in buried piping probability-of-water-leakage-accidents prediction model storage unit 36. Buried piping probability-of-water-leakage-accidents prediction apparatus 3 receives buried piping probability-of-water-leakage-accidents prediction model 6 from buried piping probability-of-water-leakage-accidents prediction model generation apparatus 2. Buried piping probability-of-water-leakage-accidents prediction model 6 includes, for example, exceedance-probability-of-pipe-wall-thickness prediction model 21 (see Figs. 5 and 6) and conversion coefficient 23 (see Fig. 7).

Referring to Fig. 34, probability-of-water-leakage-accidents storage unit 37 stores the probability of water leakage accidents of the buried piping calculated by probability-of-water-leakage-accidents calculation unit 54 (see Fig. 34). As shown in Fig. 41, the probability of water leakage accidents of the buried piping is stored in probability-of-water-leakage-accidents storage unit 37 in association with the pipeline ID of the buried piping.

Referring to Fig. 34, a program (e.g., buried piping probability-of-water-leakage-accidents prediction program 48) for realizing the function of buried piping probability-of-water-leakage-accidents prediction apparatus 3 is stored in program storage unit 38.

<Buried Piping Data Acceptance Unit 50>

Referring to Fig. 34, buried piping data acceptance unit 50 accepts buried piping data 40 (see Figs. 34 to 36) from the customer. Buried piping data 40 is stored in buried piping data storage unit 31. Buried piping data 40 may be stored in storage medium 308 (see Fig. 33) provided from the customer. Buried piping data 40 may be stored in storage 310 (see Fig. 33) in advance.

<Buried Piping Data Preprocessing Unit 51>

Referring to Fig. 34, buried piping data preprocessing unit 51 generates preprocessed buried piping data 46 (see Fig. 40) from buried piping data 40 (see Figs. 34 to 36). Preprocessed buried piping data 46 includes, for example, a pipeline ID, a burial environment, a burial period of time T, a nominal pipe wall thickness, and a material of the buried piping. The burial environment is a type of soil in which the buried piping is buried. As described above, the burial environment is classified into four burial environments A, B, C, and D, depending on a type of soil and a soil resistivity. The burial period of time T is a period of time in which the buried piping is buried. For example, when a prediction result of the probability of water leakage accidents of the buried piping in the current year (the year in which the prediction of the probability of water leakage accidents of the buried piping is executed) is acquired, burial period of time T is a difference between the current year (the year in which the prediction of the probability of water leakage accidents of the buried piping is executed) and the installation year of the buried piping (see Fig. 36) stored in buried piping data storage unit 31 (see Fig. 34). When a prediction result of the probability of water leakage accidents of the buried piping in a future year is acquired, burial period of time T is a difference between the future year and the installation year of the buried piping (see Fig. 36) stored in buried piping data storage unit 31 (see Fig. 34).

<Exceedance-Probability-of-Pipe-Wall-Thickness Calculation Unit 52>

Referring to Fig. 34, exceedance-probability-of-pipe-wall-thickness calculation unit 52 calculates the exceedance probability of pipe wall thickness of the buried piping for each pipeline ID. Specifically, exceedance-probability-of-pipe-wall-thickness calculation unit 52 calculates the exceedance probability of pipe wall thickness of the buried piping by inputting the burial environment, the burial period of time and the nominal pipe wall thickness of the buried piping to exceedance-probability-of-pipe-wall-thickness prediction model 21 stored in buried piping probability-of-water-leakage-accidents prediction model storage unit 36 (see Fig. 34).

<Probability-of-Water-Leakage-Accidents Calculation Unit 54>

Referring to Fig. 34, probability-of-water-leakage-accidents calculation unit 54 calculates the probability of water leakage accidents of the buried piping for each pipeline ID from preprocessed buried piping data 46. The probability of water leakage accidents of the buried piping is the number of water leakage accidents of the buried piping per unit time (e.g., 1 year) and per unit distance (e.g., 1 km). Probability-of-water-leakage-accidents calculation unit 54 includes a conversion coefficient selection unit 55.

<Conversion Coefficient Selection Unit 55>

Referring to Fig. 34, conversion coefficient selection unit 55 selects conversion coefficient 23 corresponding to the material of the buried piping from conversion coefficient 23 (see Fig. 7) stored in buried piping probability-of-water-leakage-accidents prediction model storage unit 36 (see Fig. 34).

<Probability-of-Water-Leakage-Accidents Prediction Result Output Unit 57>

Probability-of-water-leakage-accidents prediction result output unit 57 outputs probability-of-water-leakage-accidents prediction result 60 of the buried piping to at least one of display 304, storage medium 308 or storage 310 shown in Fig. 33. For example, probability-of-water-leakage-accidents prediction result 60 may be a probability-of-water-leakage-accidents prediction table 61 (see Fig. 41), or may be a probability-of-water-leakage-accidents prediction map 62 (see Fig. 42). In probability-of-water-leakage-accidents prediction table 61, the pipeline ID and the probability of water leakage accidents of the buried piping are associated with each other. In probability-of-water-leakage-accidents prediction map 62, the position and the probability of water leakage accidents of the buried piping are shown on a map. Probability-of-water-leakage-accidents prediction map 62 is generated by probability-of-water-leakage-accidents prediction result output unit 57 from the probability of water leakage accidents of the buried piping (Fig. 41) associated with the pipeline ID and pipeline map 41 (see Fig. 35) including the pipeline ID and the position of the buried piping.

<Buried Piping Probability-of-Water-Leakage-Accidents Prediction Method>

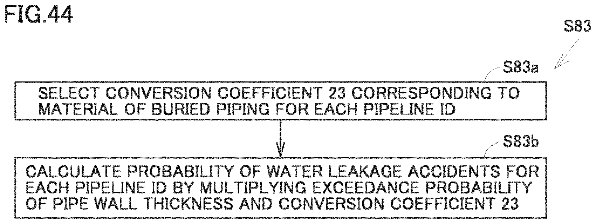

A buried piping probability-of-water-leakage-accidents prediction method of the present embodiment will be described with reference to Figs. 43 and 44.

Referring to Fig. 43, buried piping data preprocessing unit 51 generates preprocessed buried piping data 46 (see Fig. 40) from buried piping data 40 (see Figs. 34 to 36) stored in buried piping data storage unit 31 (see Fig. 34) (step S81).

Specifically, buried piping data preprocessing unit 51 calculates burial period of time T of the buried piping for each pipeline ID. For example, when the prediction result of the probability of water leakage accidents of the buried piping in the current year (the year in which the prediction of the probability of water leakage accidents of the buried piping is executed), buried piping data preprocessing unit 51 calculates, as burial period of time T of the buried piping (see Fig. 40), a difference between the current year stored in storage unit 30 and the installation year of the buried piping (see Fig. 36) stored in buried piping data storage unit 31 (see Fig. 34). When the prediction result of the probability of water leakage accidents of the buried piping in the future year is acquired, buried piping data preprocessing unit 51 calculates, as burial period of time T of the buried piping (see Fig. 40), a difference between the future year accepted by input device 301 (see Fig. 33) and stored in storage unit 30 and the installation year of the buried piping (see Fig. 36) stored in buried piping data storage unit 31 (see Fig. 34).

Buried piping data preprocessing unit 51 acquires the nominal pipe wall thickness of the buried piping for each pipeline ID from the installation (burial) year, the nominal diameter, the type of joint, and the type of the pipe wall thickness (see Fig. 36) stored in buried piping data storage unit 31 (see Fig. 34) and nominal pipe wall thickness data 43 (see Fig. 37) stored in nominal pipe wall thickness database unit 32 (see Fig. 34).

Buried piping data preprocessing unit 51 acquires the burial environment of the buried piping for each pipeline ID from pipeline map 41 (see Fig. 35) stored in buried piping data storage unit 31 (see Fig. 34) and burial environment map 44 (see Fig. 38) stored in burial environment map storage unit 33. Buried piping data preprocessing unit 51 acquires the material from buried piping data 40 shown in Fig. 34 (see Figs. 34 to 36). As a result, buried piping data preprocessing unit 51 generates preprocessed buried piping data 46 (see Fig. 40) from buried piping data 40. Buried piping data preprocessing unit 51 outputs preprocessed buried piping data 46 to preprocessed buried piping data storage unit 34 (see Fig. 34). Preprocessed buried piping data 46 is stored in preprocessed buried piping data storage unit 34.

Referring to Fig. 43, exceedance-probability-of-pipe-wall-thickness calculation unit 52 calculates the exceedance probability of pipe wall thickness of the buried piping for each pipeline ID (step S82). Specifically, exceedance-probability-of-pipe-wall-thickness calculation unit 52 reads out the pipeline ID, the burial environment, burial period of time T, and the nominal pipe wall thickness from preprocessed buried piping data 46 (Fig. 40) stored in preprocessed buried piping data storage unit 34. Exceedance-probability-of-pipe-wall-thickness calculation unit 52 selects exceedance-probability-of-pipe-wall-thickness prediction model 21 corresponding to the read-out burial environment and nominal pipe wall thickness, of exceedance-probability-of-pipe-wall-thickness prediction model 21 stored in buried piping probability-of-water-leakage-accidents prediction model storage unit 36 (see Fig. 34). Exceedance-probability-of-pipe-wall-thickness calculation unit 52 calculates the exceedance probability of pipe wall thickness of the buried piping for each pipeline ID by inputting burial period of time T of the buried piping to selected exceedance-probability-of-pipe-wall-thickness prediction model 21.

Referring to Fig. 43, probability-of-water-leakage-accidents calculation unit 54 calculates the probability of water leakage accidents of the buried piping for each pipeline ID (step S83). Specifically, referring to Fig. 44, probability-of-water-leakage-accidents calculation unit 54 reads out the pipeline ID and the material of the buried piping from preprocessed buried piping data 46 (Fig. 40) stored in preprocessed buried piping data storage unit 34 (see Fig. 34). Conversion coefficient selection unit 55 selects conversion coefficient 23 corresponding to the material of the buried piping from conversion coefficient 23 (see Fig. 7) stored in buried piping probability-of-water-leakage-accidents prediction model storage unit 36 (see Fig. 34) (step S83a). Probability-of-water-leakage-accidents calculation unit 54 calculates the probability of water leakage accidents of the buried piping for each pipeline ID by multiplying the exceedance probability of pipe wall thickness of the buried piping calculated in step S82 and conversion coefficient 23 selected in step S83a (step S83b).

Probability-of-water-leakage-accidents calculation unit 54 outputs the probability of water leakage accidents of the buried piping calculated in step S83b to probability-of-water-leakage-accidents storage unit 37 (see Fig. 34). As shown in Fig. 41, the probability of water leakage accidents of the buried piping is stored in probability-of-water-leakage-accidents storage unit 37 in association with the pipeline ID.

Referring to Fig. 43, probability-of-water-leakage-accidents prediction result output unit 57 outputs probability-of-water-leakage-accidents prediction result 60 to at least one of display 304, storage medium 308 or storage 310 shown in Fig. 33 (step S84). For example, probability-of-water-leakage-accidents prediction result 60 may be probability-of-water-leakage-accidents prediction table 61 (see Fig. 41), or may be probability-of-water-leakage-accidents prediction map 62 (see Fig. 42).

Buried piping probability-of-water-leakage-accidents prediction program 48 (see Fig. 34) causes processor 302 (see Fig. 33) to execute the buried piping probability-of-water-leakage-accidents prediction method of the present embodiment. The program that causes processor 302 to execute the buried piping probability-of-water-leakage-accidents prediction method of the present embodiment is recorded on a computer-readable recording medium (a non-transitory computer-readable recording medium, e.g., storage medium 308) of the present embodiment.

The effects of buried piping probability-of-water-leakage-accidents prediction apparatus 3, the buried piping probability-of-water-leakage-accidents prediction method and the program of the present embodiment will be described.

Buried piping probability-of-water-leakage-accidents prediction apparatus 3 of the present embodiment includes exceedance-probability-of-pipe-wall-thickness calculation unit 52 and probability-of-water-leakage-accidents calculation unit 54. Exceedance-probability-of-pipe-wall-thickness calculation unit 52 calculates an exceedance probability of pipe wall thickness of buried piping by inputting a burial environment, a burial period of time and a pipe wall thickness (e.g., a nominal pipe wall thickness) of the buried piping to exceedance-probability-of-pipe-wall-thickness prediction model 21. Probability-of-water-leakage-accidents calculation unit 54 calculates a probability of water leakage accidents of the buried piping using the exceedance probability of pipe wall thickness of the buried piping and conversion coefficient 23. Exceedance-probability-of-pipe-wall-thickness prediction model 21 is generated in accordance with a burial environment of piping and a pipe wall thickness (e.g., a nominal pipe wall thickness) of the piping, and provides an exceedance probability of pipe wall thickness of the piping that continuously changes with a continuous change in a burial period of time of the piping. The exceedance probability of pipe wall thickness of the piping is a probability of a corrosion depth of the piping exceeding the pipe wall thickness (e.g., the nominal pipe wall thickness) of the piping. The exceedance probability of pipe wall thickness of the buried piping is a probability of a corrosion depth of the buried piping exceeding the pipe wall thickness (e.g., the nominal pipe wall thickness) of the buried piping. Conversion coefficient 23 is a coefficient that converts the exceedance probability of pipe wall thickness of the piping or a first index that can be calculated from the exceedance probability of pipe wall thickness of the piping into a probability of water leakage accidents of the piping or a second index that can calculate the probability of water leakage accidents of the piping. The probability of water leakage accidents of the piping is the number of water leakage accidents of the piping per unit time and per unit distance. The probability of water leakage accidents of the buried piping is the number of water leakage accidents of the buried piping per unit time and per unit distance.

According to buried piping probability-of-water-leakage-accidents prediction apparatus 3 of the present embodiment, it is possible to more accurately predict the probability of water leakage accidents of the buried piping for an arbitrary burial period of time.

In buried piping probability-of-water-leakage-accidents prediction apparatus 3 of the present embodiment, probability-of-water-leakage-accidents calculation unit 54 includes conversion coefficient selection unit 55 that selects conversion coefficient 23 corresponding to a material of the buried piping.

According to buried piping probability-of-water-leakage-accidents prediction apparatus 3 of the present embodiment, it is possible to more accurately predict the probability of water leakage accidents of the buried piping for an arbitrary burial period of time in accordance with the material of the buried piping.

In buried piping probability-of-water-leakage-accidents prediction apparatus 3 of the present embodiment, conversion coefficient 23 is a coefficient that converts the exceedance probability of pipe wall thickness of the piping into the probability of water leakage accidents of the piping. Probability-of-water-leakage-accidents calculation unit 54 calculates the probability of water leakage accidents of the buried piping by multiplying the exceedance probability of pipe wall thickness of the buried piping and conversion coefficient 23.

Therefore, the probability of water leakage accidents of the buried piping can be calculated more simply. A process of calculation of the probability of water leakage accidents of the buried piping is clear and the customer reliability for the probability of water leakage accidents of the buried piping calculated by buried piping probability-of-water-leakage-accidents prediction apparatus 3 of the present embodiment can be enhanced.

The buried piping probability-of-water-leakage-accidents prediction method of the present embodiment includes: a step of calculating an exceedance probability of pipe wall thickness of buried piping by inputting a burial environment, a burial period of time and a pipe wall thickness (e.g., a nominal pipe wall thickness) of the buried piping to exceedance-probability-of-pipe-wall-thickness prediction model 21 (step S82); and a step of calculating a probability of water leakage accidents of the buried piping using the exceedance probability of pipe wall thickness of the buried piping and conversion coefficient 23 (step S83). Exceedance-probability-of-pipe-wall-thickness prediction model 21 is generated in accordance with a burial environment of piping and a pipe wall thickness (e.g., a nominal pipe wall thickness) of the piping, and provides an exceedance probability of pipe wall thickness of the piping that continuously changes with a continuous change in a burial period of time of the piping. The exceedance probability of pipe wall thickness of the piping is a probability of a corrosion depth of the piping exceeding the pipe wall thickness (e.g., the nominal pipe wall thickness) of the piping. The exceedance probability of pipe wall thickness of the buried piping is a probability of a corrosion depth of the buried piping exceeding the pipe wall thickness (e.g., the nominal pipe wall thickness) of the buried piping. Conversion coefficient 23 is a coefficient that converts the exceedance probability of pipe wall thickness of the piping into a probability of water leakage accidents of the piping. The probability of water leakage accidents of the piping is the number of water leakage accidents of the piping per unit time and per unit distance. The probability of water leakage accidents of the buried piping is the number of water leakage accidents of the buried piping per unit time and per unit distance.

According to the buried piping probability-of-water-leakage-accidents prediction method of the present embodiment, it is possible to more accurately predict the probability of water leakage accidents of the buried piping for an arbitrary burial period of time.

In the buried piping probability-of-water-leakage-accidents prediction method of the present embodiment, the step of calculating the probability of water leakage accidents of the buried piping (step S83) includes a step of selecting conversion coefficient 23 corresponding to a material of the buried piping (step S83a).

According to the buried piping probability-of-water-leakage-accidents prediction method of the present embodiment, it is possible to more accurately predict the probability of water leakage accidents of the buried piping for an arbitrary burial period of time in accordance with the material of the buried piping.

In the buried piping probability-of-water-leakage-accidents prediction method of the present embodiment, conversion coefficient 23 is a coefficient that converts the exceedance probability of pipe wall thickness of the piping into the probability of water leakage accidents of the piping. The step of calculating the probability of water leakage accidents of the buried piping (step S83) is a step of calculating the probability of water leakage accidents of the buried piping by multiplying the exceedance probability of pipe wall thickness of the buried piping and conversion coefficient 23.

Therefore, the probability of water leakage accidents of the buried piping can be more simply calculated from the exceedance probability of pipe wall thickness of the buried piping. A process of calculation of the probability of water leakage accidents of the buried piping is clear and the customer reliability for the probability of water leakage accidents of the buried piping calculated by buried piping probability-of-water-leakage-accidents prediction apparatus 3 of the present embodiment can be enhanced.

The program (buried piping probability-of-water-leakage-accidents prediction program 48) of the present embodiment causes processor 302 to execute each step of the buried piping probability-of-water-leakage-accidents prediction method of the present embodiment.

According to the program (buried piping probability-of-water-leakage-accidents prediction program 48) of the present embodiment, it is possible to more accurately predict the probability of water leakage accidents of the buried piping for an arbitrary burial period of time.

(Second Embodiment)

Buried piping probability-of-water-leakage-accidents prediction system 1 and a buried piping probability-of-water-leakage-accidents prediction method of a second embodiment will be described with reference to Figs. 1 to 7, 33 to 42 and 45 to 51.

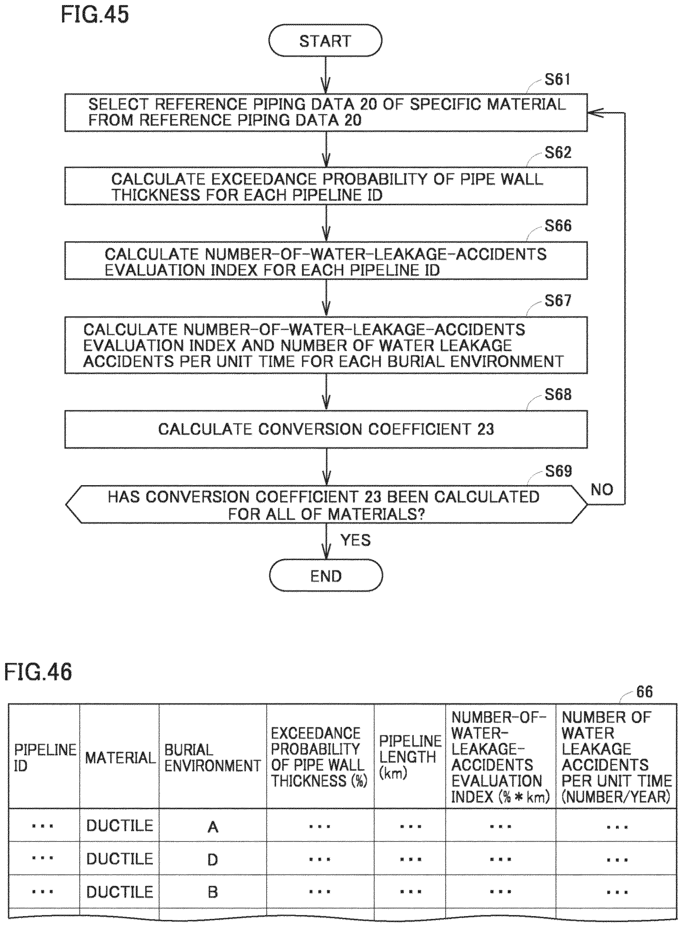

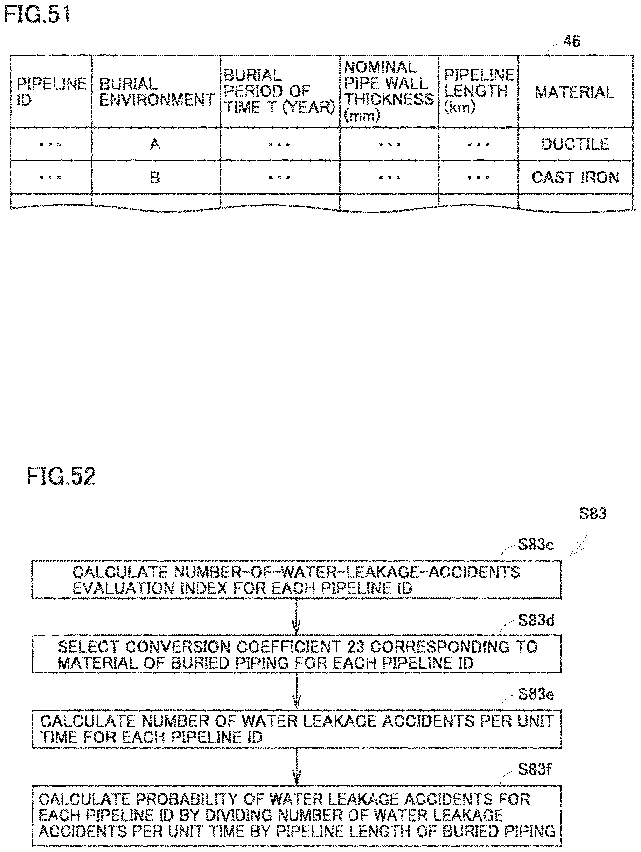

Buried piping probability-of-water-leakage-accidents prediction system 1 of the present embodiment is different from buried piping probability-of-water-leakage-accidents prediction system 1 of the first embodiment mainly in terms of the following two points. First, the present embodiment is different from the first embodiment in terms of the method for calculating conversion coefficient 23 (see Fig. 45) in conversion coefficient calculation unit 18 (see Fig. 3) of buried piping probability-of-water-leakage-accidents prediction model generation apparatus 2. Secondly, the present embodiment is different from the first embodiment in terms of preprocessed buried piping data 46 (see Fig. 51) generated by buried piping data preprocessing unit 51 (see Fig. 34) of buried piping probability-of-water-leakage-accidents prediction apparatus 3. The buried piping probability-of-water-leakage-accidents prediction method of the present embodiment is different from the buried piping probability-of-water-leakage-accidents prediction method of the first embodiment in terms of the method for calculating the probability of water leakage accidents (see Fig. 52) in probability-of-water-leakage-accidents calculation unit 54 (see Fig. 34).

<Conversion Coefficient Calculation Unit 18 and Conversion Coefficient Calculation Method>

In the present embodiment, conversion coefficient calculation unit 18 (see Fig. 3) calculates conversion coefficient 23 (see Fig. 7) that converts the first index that can be calculated from the exceedance probability of pipe wall thickness of the piping into the probability of water leakage accidents of the piping or the second index that can calculate the probability of water leakage accidents of the piping.

Although the first index is not particularly limited, the first index is, for example, a number-of-water-leakage-accidents evaluation index of the piping. The number-of-water-leakage-accidents evaluation index of the piping is given by a product of the exceedance probability of pipe wall thickness of the piping and the pipeline length of the piping. Although the second index is not particularly limited, the second index is, for example, the number of water leakage accidents of the piping per unit time (e.g., 1 year). The probability of water leakage accidents of the piping can be calculated by dividing the number of water leakage accidents of the piping per unit time by the pipeline length of the piping. Conversion coefficient 23 of the present embodiment is, for example, a coefficient that converts the number-of-water-leakage-accidents evaluation index of the piping into the number of water leakage accidents of the piping per unit time. The second index may be an index proportional to the first index.

The method by which conversion coefficient calculation unit 18 of the present embodiment calculates conversion coefficient 23 will be described with reference to Fig. 45.

Referring to Fig. 45, steps S61 and S62 of the present embodiment are the same as steps S61 and S62 of the first embodiment (see Fig. 27).

Referring to Fig. 45, conversion coefficient calculation unit 18 calculates the number-of-water-leakage-accidents evaluation index for each pipeline ID (step S66). Specifically, conversion coefficient calculation unit 18 reads out the pipeline ID and the pipeline length from reference piping data 20 (see Fig. 4) stored in reference piping data storage unit 11 (see Fig. 3). Conversion coefficient calculation unit 18 calculates the number-of-water-leakage-accidents evaluation index for each pipeline ID by multiplying the exceedance probability of pipe wall thickness calculated in step S62 and the pipeline length.

Referring to Fig. 45, conversion coefficient calculation unit 18 calculates the number-of-water-leakage-accidents evaluation index and the number of water leakage accidents per unit time for each burial environment (step S67).

Specifically, conversion coefficient calculation unit 18 generates reference piping data for conversion coefficient calculation 66 (see Fig. 46) for the reference piping having the specific material selected in step S61 from the pipeline ID, the burial environment and the number of water leakage accidents per unit time (e.g., 5 years) in reference piping data 20 (see Fig. 4) stored in reference piping data storage unit 11 (see Fig. 3) and the number-of-water-leakage-accidents evaluation index calculated in S66. Reference piping data for conversion coefficient calculation 66 includes the pipeline ID, the burial environment, the number-of-water-leakage-accidents evaluation index, and the number of water leakage accidents per unit time (e.g., 1 year). In reference piping data for conversion coefficient calculation 66, the pipeline ID, the burial environment, the number-of-water-leakage-accidents evaluation index, and the number of water leakage accidents per unit time are associated with each other.

When the unit time (e.g., 5 years) in reference piping data 20 (see Fig. 4) is different from the unit time (e.g., 1 year) in reference piping data for conversion coefficient calculation 66 (see Fig. 46), conversion coefficient calculation unit 18 reads out the number of water leakage accidents per unit time in reference piping data 20 from reference piping data storage unit 11 (see Fig. 3) and converts the number of water leakage accidents per unit time in reference piping data 20 into the number of water leakage accidents per unit time in reference piping data for conversion coefficient calculation 66. When the unit time in reference piping data 20 is the same as the unit time in reference piping data for conversion coefficient calculation 66, conversion coefficient calculation unit 18 reads out the number of water leakage accidents per unit time in reference piping data 20 from reference piping data storage unit 11 and sets the number of water leakage accidents per unit time in reference piping data 20 to be the number of water leakage accidents per unit time in reference piping data for conversion coefficient calculation 66. Reference piping data for conversion coefficient calculation 66 may further include the specific material selected in step S61, the exceedance probability of pipe wall thickness calculated in step S62, and the pipeline length in reference piping data 20 (see Fig. 4).

Conversion coefficient calculation unit 18 divides reference piping data for conversion coefficient calculation 66 (see Fig. 46) into groups for each burial environment. Conversion coefficient calculation unit 18 divides reference piping data for conversion coefficient calculation 66 into a group of burial environment A, a group of burial environment B, a group of burial environment C, and a group of burial environment D.

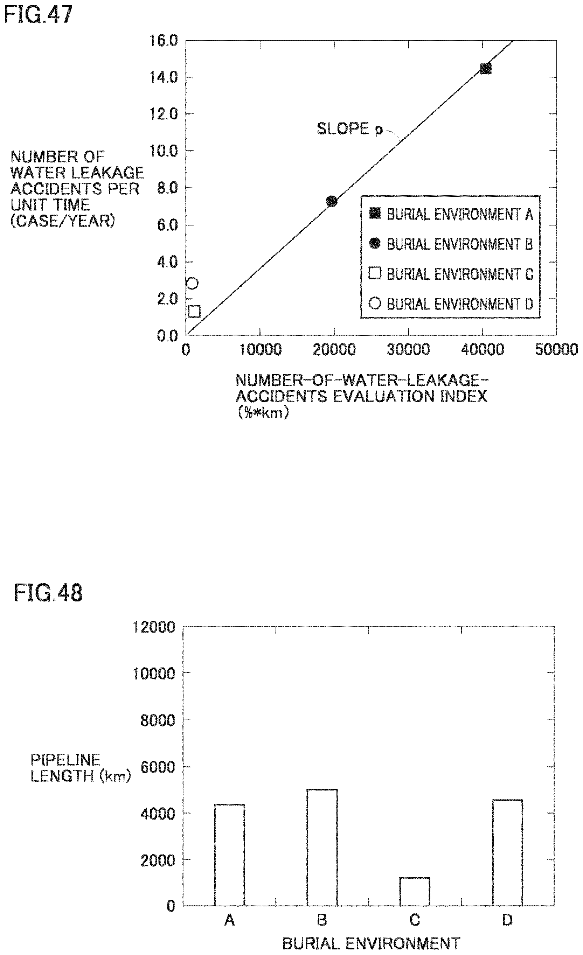

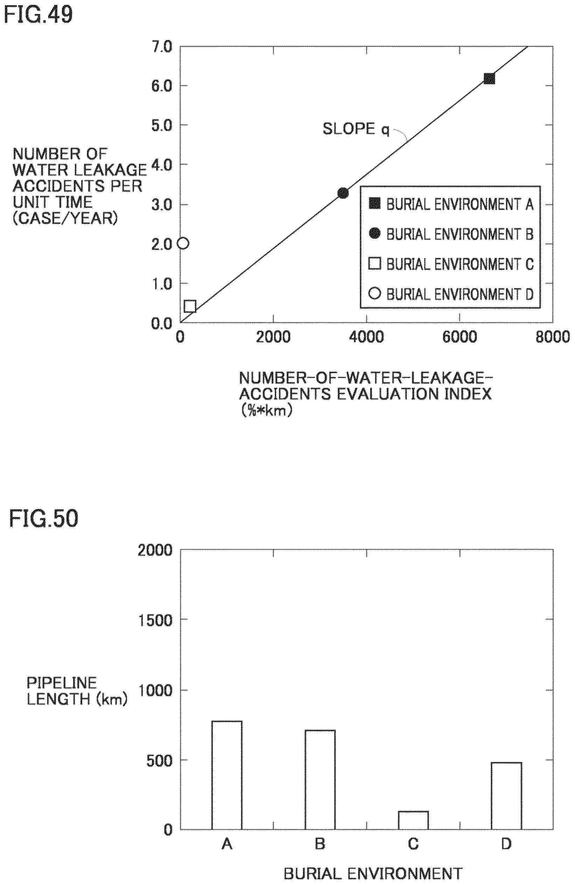

Conversion coefficient calculation unit 18 calculates the number-of-water-leakage-accidents evaluation index and the number of water leakage accidents per unit time for each group. Conversion coefficient calculation unit 18 calculates a sum of the number-of-water-leakage-accidents evaluation index of the pipelines included in each group as the number-of-water-leakage-accidents evaluation index of each group. Conversion coefficient calculation unit 18 calculates a sum of the number of water leakage accidents per unit time of the pipelines included in each group as the number of water leakage accidents per unit time of each group. As a result, conversion coefficient calculation unit 18 acquires data (see the points in Figs. 47 and 49) of a relationship between the number-of-water-leakage-accidents evaluation index and the number of water leakage accidents per unit time.

Referring to Fig. 45, conversion coefficient calculation unit 18 calculates conversion coefficient 23 for the specific material selected in S61 from the data (see the points in Figs. 47 and 49) of the relationship between the number-of-water-leakage-accidents evaluation index and the number of water leakage accidents per unit time (step S68).

The number-of-water-leakage-accidents evaluation index of the piping is proportional to the pipeline length of the piping. The number of water leakage accidents of the piping per unit time is also proportional to the pipeline length of the piping. Therefore, the number-of-water-leakage-accidents evaluation index is considered to be an index proportional to the number of water leakage accidents per unit time. Thus, conversion coefficient calculation unit 18 calculates, as conversion coefficient 23, a proportionality coefficient acquired by performing linear regression of the data (see the points in Figs. 47 and 49) of the relationship between the number-of-water-leakage-accidents evaluation index and the number of water leakage accidents per unit time, for example. A slope p of a regression line in Fig. 47 represents conversion coefficient 23 for ductile piping. A slope q of a regression line in Fig. 49 represents conversion coefficient 23 for cast iron piping.

As shown in Figs. 48 and 50, the pipeline length in each group is sufficiently long. A reason for this is that the number of data of reference piping data 20 included in each group is sufficiently large. Therefore, the reliability of the data (see the points in Figs. 47 and 49) of the relationship between the number-of-water-leakage-accidents evaluation index and the number of water leakage accidents per unit time is high and conversion coefficient 23 can be calculated with a higher degree of accuracy.

Referring to Fig. 45, step S69 of the present embodiment is the same as step S69 of the first embodiment. Conversion coefficient calculation unit 18 outputs calculated conversion coefficient 23 to buried piping probability-of-water-leakage-accidents prediction model storage unit 36 (see Fig. 3). Conversion coefficient 23 is stored in buried piping probability-of-water-leakage-accidents prediction model storage unit 36.

Buried piping probability-of-water-leakage-accidents prediction model generation apparatus 2 transmits buried piping probability-of-water-leakage-accidents prediction model 6 (see Fig. 3) including exceedance-probability-of-pipe-wall-thickness prediction model 21 (see Figs. 5 and 6) and conversion coefficient 23 (see Fig. 7) to buried piping probability-of-water-leakage-accidents prediction apparatus 3 (see Fig. 1). Buried piping probability-of-water-leakage-accidents prediction apparatus 3 receives buried piping probability-of-water-leakage-accidents prediction model 6 (see Fig. 34) from buried piping probability-of-water-leakage-accidents prediction model generation apparatus 2. Buried piping probability-of-water-leakage-accidents prediction model 6 is stored in buried piping probability-of-water-leakage-accidents prediction model storage unit 36 (see Fig. 34) of buried piping probability-of-water-leakage-accidents prediction apparatus 3.

<Buried Piping Data Preprocessing Unit 51 and Preprocessed Buried Piping Data 46>

Preprocessed buried piping data 46 (see Fig. 51) generated by buried piping data preprocessing unit 51 of the present embodiment further includes the pipeline length of the buried piping, in addition to the pipeline ID, the burial environment, burial period of time T, the nominal pipe wall thickness, and the material of the buried piping included in preprocessed buried piping data 46 (see Fig. 40) generated by buried piping data preprocessing unit 51 of the first embodiment. Buried piping data preprocessing unit 51 reads out the pipeline length (see Fig. 36) stored in buried piping data storage unit 31 (see Fig. 34) and includes the pipeline length in preprocessed buried piping data 46.

<Buried Piping Probability-of-Water-Leakage-Accidents Prediction Method>

The buried piping probability-of-water-leakage-accidents prediction method of the present embodiment will be described with reference to Figs. 43 and 52. Although the buried piping probability-of-water-leakage-accidents prediction method of the present embodiment is similar to the buried piping probability-of-water-leakage-accidents prediction method of the first embodiment, the buried piping probability-of-water-leakage-accidents prediction method of the present embodiment is different from the buried piping probability-of-water-leakage-accidents prediction method of the first embodiment in terms of the following points.

Referring to Fig. 43, in step S81 of the present embodiment, buried piping data preprocessing unit 51 generates preprocessed buried piping data 46 (see Fig. 51) from buried piping data 40 (see Figs. 34 to 36) stored in buried piping data storage unit 31 (see Fig. 34). Although step S81 of the present embodiment is similar to step S81 of the first embodiment, buried piping data preprocessing unit 51 further acquires the pipeline length of the buried piping (see Fig. 36) from buried piping data 40 stored in buried piping data storage unit 31 (see Fig. 34) in the present embodiment.

Referring to Fig. 43, although step S82 of the present embodiment is similar to step S82 of the first embodiment, step S82 of the present embodiment is different from step S82 of the first embodiment in that probability-of-water-leakage-accidents calculation unit 54 reads out the pipeline ID, the burial environment, burial period of time T, and the nominal pipe wall thickness of the buried piping from preprocessed buried piping data 46 (see Fig. 51) stored in preprocessed buried piping data storage unit 34.

Referring to Fig. 43, probability-of-water-leakage-accidents calculation unit 54 calculates the probability of water leakage accidents of the buried piping for each pipeline ID (step S83).

Specifically, referring to Fig. 52, probability-of-water-leakage-accidents calculation unit 54 calculates the number-of-water-leakage-accidents evaluation index of the buried piping for each pipeline ID (step S83c). Probability-of-water-leakage-accidents calculation unit 54 reads out the pipeline ID, the material and the pipeline length of the buried piping from preprocessed buried piping data 46 (see Fig. 51) stored in preprocessed buried piping data storage unit 34 (see Fig. 3). Probability-of-water-leakage-accidents calculation unit 54 calculates the number-of-water-leakage-accidents evaluation index of the buried piping for each pipeline ID by multiplying the exceedance probability of pipe wall thickness of the buried piping calculated in step S82 and the pipeline length of the buried piping.

Conversion coefficient selection unit 55 selects conversion coefficient 23 corresponding to the material of the buried piping for each pipeline ID from conversion coefficient 23 (see Fig. 7) stored in buried piping probability-of-water-leakage-accidents prediction model storage unit 36 (see Fig. 34) (step S83d). Probability-of-water-leakage-accidents calculation unit 54 calculates the number of water leakage accidents of the buried piping per unit time (e.g., 1 year) for each pipeline ID by multiplying the number-of-water-leakage-accidents evaluation index of the buried piping calculated in step S83d and conversion coefficient 23 selected in step S83d (step S83e). Probability-of-water-leakage-accidents calculation unit 54 calculates the probability of water leakage accidents of the buried piping for each pipeline ID by dividing the number of water leakage accidents of the buried piping per unit time by the pipeline length of the buried piping (step S83f).

Probability-of-water-leakage-accidents calculation unit 54 outputs the probability of water leakage accidents of the buried piping calculated in step S83f to probability-of-water-leakage-accidents storage unit 37 (see Fig. 34). As shown in Fig. 41, the probability of water leakage accidents of the buried piping is stored in probability-of-water-leakage-accidents storage unit 37 in association with the pipeline ID.

The program of the present embodiment causes processor 302 (see Fig. 33) to execute the buried piping probability-of-water-leakage-accidents prediction method of the present embodiment. The program that causes processor 302 to execute the buried piping probability-of-water-leakage-accidents prediction method of the present embodiment is recorded on a computer-readable recording medium (a non-transitory computer-readable recording medium, e.g., storage medium 308) of the present embodiment.

The effects of buried piping probability-of-water-leakage-accidents prediction apparatus 3, the buried piping probability-of-water-leakage-accidents prediction method and the program of the present embodiment will be described. Buried piping probability-of-water-leakage-accidents prediction apparatus 3, the buried piping probability-of-water-leakage-accidents prediction method and the program of the present embodiment provide the following effects similar to those of buried piping probability-of-water-leakage-accidents prediction apparatus 3, the buried piping probability-of-water-leakage-accidents prediction method and the program of the first embodiment.

Buried piping probability-of-water-leakage-accidents prediction apparatus 3 of the present embodiment includes exceedance-probability-of-pipe-wall-thickness calculation unit 52 and probability-of-water-leakage-accidents calculation unit 54. Exceedance-probability-of-pipe-wall-thickness calculation unit 52 calculates an exceedance probability of pipe wall thickness of buried piping by inputting a burial environment, a burial period of time and a pipe wall thickness (e.g.,

a nominal pipe wall thickness) of the buried piping to exceedance-probability-of-pipe-wall-thickness prediction model 21. Probability-of-water-leakage-accidents calculation unit 54 calculates a probability of water leakage accidents of the buried piping using the exceedance probability of pipe wall thickness of the buried piping and conversion coefficient 23. Exceedance-probability-of-pipe-wall-thickness prediction model 21 is generated in accordance with a burial environment of piping and a pipe wall thickness (e.g., a nominal pipe wall thickness) of the piping, and provides an exceedance probability of pipe wall thickness of the piping that continuously changes with a continuous change in a burial period of time of the piping. The exceedance probability of pipe wall thickness of the piping is a probability of a corrosion depth of the piping exceeding the pipe wall thickness (e.g., the nominal pipe wall thickness) of the piping. The exceedance probability of pipe wall thickness of the buried piping is a probability of a corrosion depth of the buried piping exceeding the pipe wall thickness (e.g., the nominal pipe wall thickness) of the buried piping. Conversion coefficient 23 is a coefficient that converts a first index that can be calculated from the exceedance probability of pipe wall thickness of the piping into a second index that can calculate the probability of water leakage accidents of the piping. The probability of water leakage accidents of the piping is the number of water leakage accidents of the piping per unit time and per unit distance. The probability of water leakage accidents of the buried piping is the number of water leakage accidents of the buried piping per unit time and per unit distance.

According to buried piping probability-of-water-leakage-accidents prediction apparatus 3 of the present embodiment, it is possible to more accurately predict the probability of water leakage accidents of the buried piping for an arbitrary burial period of time.

In buried piping probability-of-water-leakage-accidents prediction apparatus 3 of the present embodiment, probability-of-water-leakage-accidents calculation unit 54 includes conversion coefficient selection unit 55 that selects conversion coefficient 23 corresponding to a material of the buried piping.

According to buried piping probability-of-water-leakage-accidents prediction apparatus 3 of the present embodiment, it is possible to more accurately predict the probability of water leakage accidents of the buried piping for an arbitrary burial period of time in accordance with the material of the buried piping.

In buried piping probability-of-water-leakage-accidents prediction apparatus 3 of the present embodiment, the conversion coefficient is a coefficient that converts the first index into the second index. The first index is the number-of-water-leakage-accidents evaluation index of the piping and the second index is the number of water leakage accidents of the piping per unit time. Probability-of-water-leakage-accidents calculation unit 54 calculates the number-of-water-leakage-accidents evaluation index of the buried piping by multiplying the exceedance probability of pipe wall thickness of the buried piping and the pipeline length of the buried piping, calculates the number of water leakage accidents of the buried piping per the unit time by multiplying the number-of-water-leakage-accidents evaluation index of the buried piping and conversion coefficient 23, and calculates the probability of water leakage accidents of the buried piping by dividing the number of water leakage accidents of the buried piping per the unit time by the pipeline length of the buried piping.

Since the number of water leakage accidents of the piping per unit time is used as the second index, conversion coefficient 23 can be more simply calculated from reference piping data 20. The generation of buried piping probability-of-water-leakage-accidents prediction model 6 (see Figs. 3, 5 to 7 and 34) including conversion coefficient 23 becomes easier.

The buried piping probability-of-water-leakage-accidents prediction method of the present embodiment includes: a step of calculating an exceedance probability of pipe wall thickness of buried piping by inputting a burial environment, a burial period of time and a pipe wall thickness (e.g., a nominal pipe wall thickness) of the buried piping to exceedance-probability-of-pipe-wall-thickness prediction model 21 (step S82); and a step of calculating a probability of water leakage accidents of the buried piping using the exceedance probability of pipe wall thickness of the buried piping and conversion coefficient 23 (step S83). Exceedance-probability-of-pipe-wall-thickness prediction model 21 is generated in accordance with a burial environment of piping and a pipe wall thickness (e.g., a nominal pipe wall thickness) of the piping, and provides an exceedance probability of pipe wall thickness of the piping that continuously changes with a continuous change in a burial period of time of the piping. The exceedance probability of pipe wall thickness of the piping is a probability of a corrosion depth of the piping exceeding the pipe wall thickness (e.g., the nominal pipe wall thickness) of the piping. The exceedance probability of pipe wall thickness of the buried piping is a probability of a corrosion depth of the buried piping exceeding the pipe wall thickness (e.g., the nominal pipe wall thickness) of the buried piping. Conversion coefficient 23 is a coefficient that converts a first index that can be calculated from the exceedance probability of pipe wall thickness of the piping into a second index that can calculate a probability of water leakage accidents of the piping. The probability of water leakage accidents of the piping is the number of water leakage accidents of the piping per unit time and per unit distance. The probability of water leakage accidents of the buried piping is the number of water leakage accidents of the buried piping per unit time and per unit distance.

According to the buried piping probability-of-water-leakage-accidents prediction method of the present embodiment, it is possible to more accurately predict the probability of water leakage accidents of the buried piping for an arbitrary burial period of time.

In the buried piping probability-of-water-leakage-accidents prediction method of the present embodiment, the step of calculating the probability of water leakage accidents of the buried piping (step S83) includes a step of selecting conversion coefficient 23 corresponding to a material of the buried piping (step S83d).

According to the buried piping probability-of-water-leakage-accidents prediction method of the present embodiment, it is possible to more accurately predict the probability of water leakage accidents of the buried piping for an arbitrary burial period of time in accordance with the material of the buried piping.

In the buried piping probability-of-water-leakage-accidents prediction method of the present embodiment, the conversion coefficient is a coefficient that converts the first index into the second index. The first index is a number-of-water-leakage-accidents evaluation index of the piping and the second index is the number of water leakage accidents of the piping per unit time. The step of calculating the probability of water leakage accidents of the buried piping (step S83) includes a step of calculating the number-of-water-leakage-accidents evaluation index of the buried piping by multiplying the exceedance probability of pipe wall thickness of the buried piping and the pipeline length of the buried piping (step S83c), a step of calculating the number of water leakage accidents of the buried piping per unit time by multiplying the number-of-water-leakage-accidents evaluation index of the buried piping and conversion coefficient 23 (step S83e), and a step of calculating the probability of water leakage accidents of the buried piping by dividing the number of water leakage accidents of the buried piping per unit time by the pipeline length of the buried piping (step S83f).

Since the number of water leakage accidents of the piping per unit time is used as the second index, conversion coefficient 23 can be more simply calculated from reference piping data 20. The generation of buried piping probability-of-water-leakage-accidents prediction model 6 (see Figs. 3, 5 to 7 and 34) including conversion coefficient 23 becomes easier.

The program (buried piping probability-of-water-leakage-accidents prediction program 48 (see Fig. 34)) of the present embodiment causes processor 302 to execute each step of the buried piping probability-of-water-leakage-accidents prediction method of the present embodiment.

According to the program (buried piping probability-of-water-leakage-accidents prediction program 48) of the present embodiment, it is possible to more accurately predict the probability of water leakage accidents of the buried piping for an arbitrary burial period of time.

(Modifications)

The function of generating buried piping probability-of-water-leakage-accidents prediction model 6 from reference piping data 20 may be added to buried piping probability-of-water-leakage-accidents prediction apparatus 3, and buried piping probability-of-water-leakage-accidents prediction model generation apparatus 2 may be omitted from buried piping probability-of-water-leakage-accidents prediction system 1. Conversion coefficient 23 may be a coefficient that converts the exceedance probability of pipe wall thickness of the piping into the second index that can calculate the probability of water leakage accidents of the piping. Conversion coefficient 23 may be a coefficient that converts the first index that can be calculated from the exceedance probability of pipe wall thickness of the piping into the probability of water leakage accidents of the piping.

Exceedance-probability-of-pipe-wall-thickness prediction model 21 may be generated in a different way. For example, exceedance-probability-of-pipe-wall-thickness prediction model 21 may be generated from the basic regression line without considering the distribution of the basic regression line.

It should be understood that the first and second embodiments and the modifications thereof disclosed herein are illustrative and non-restrictive in every respect. The scope of the present disclosure is defined by the terms of the claims, rather than the description above, and is intended to include any modifications within the scope and meaning equivalent to the terms of the claims.

REFERENCE SIGNS LIST

1 buried piping probability-of-water-leakage-accidents prediction system; 2 buried piping probability-of-water-leakage-accidents prediction model generation apparatus; 3 buried piping probability-of-water-leakage-accidents prediction apparatus; 4 communication network; 6 buried piping probability-of-water-leakage-accidents prediction model; 10 storage unit; 11 reference piping data storage unit; 12 buried piping probability-of-water-leakage-accidents prediction model storage unit; 13 corrosion lag time storage unit; 14 program storage unit; 16 buried piping probability-of-water-leakage-accidents prediction model generation unit; 17 exceedance-probability-of-pipe-wall-thickness prediction model generation unit; 18 conversion coefficient calculation unit; 20 reference piping data; 21 exceedance-probability-of-pipe-wall-thickness prediction model; 23 conversion coefficient; 26 buried piping probability-of-water-leakage-accidents prediction model generation program; 27 lag-time-of-corrosion data; 28, 66 reference piping data for conversion coefficient calculation; 30 storage unit; 31 buried piping data storage unit; 32 nominal pipe wall thickness database unit; 33 burial environment map storage unit; 34 preprocessed buried piping data storage unit; 36 buried piping probability-of-water-leakage-accidents prediction model storage unit; 37 probability-of-water-leakage-accidents storage unit; 38 program storage unit; 40 buried piping data; 41 pipeline map; 42 buried piping attribute data; 43 nominal pipe wall thickness data; 44 burial environment map; 45 ground-burial environment correspondence data; 46 preprocessed buried piping data; 48 buried piping probability-of-water-leakage-accidents prediction program; 50 buried piping data acceptance unit; 51 preprocessing unit; 52 exceedance-probability-of-pipe-wall-thickness calculation unit; 54 probability-of-water-leakage-accidents calculation unit; 55 conversion coefficient selection unit; 57 probability-of-water-leakage-accidents prediction result output unit; 60 probability-of-water-leakage-accidents prediction result; 61 probability-of-water-leakage-accidents prediction table; 62 probability-of-water-leakage-accidents prediction map; 201, 301 input device; 202, 302 processor; 203, 303 memory; 204, 304 display; 206, 306 network controller; 207, 307 storage medium drive; 208, 308 storage medium; 210, 310 storage.

## Claims

1. A buried piping probability-of-water-leakage-accidents prediction apparatus comprising:

   an exceedance-probability-of-pipe-wall-thickness calculation unit that calculates an exceedance probability of pipe wall thickness of buried piping by inputting a burial environment, a burial period of time and a pipe wall thickness of the buried piping to an exceedance-probability-of-pipe-wall-thickness prediction model; and
   a probability-of-water-leakage-accidents calculation unit that calculates a probability of water leakage accidents of the buried piping using the exceedance probability of pipe wall thickness of the buried piping and a conversion coefficient, wherein
   the exceedance-probability-of-pipe-wall-thickness prediction model is generated in accordance with a burial environment of piping and a pipe wall thickness of the piping, and provides an exceedance probability of pipe wall thickness of the piping that continuously changes with a continuous change in a burial period of time of the piping, and
   the conversion coefficient is a coefficient that converts the exceedance probability of pipe wall thickness of the piping or a first index that can be calculated from the exceedance probability of pipe wall thickness of the piping into a probability of water leakage accidents of the piping or a second index that can calculate the probability of water leakage accidents of the piping.

2. The buried piping probability-of-water-leakage-accidents prediction apparatus according to claim 1, wherein the probability-of-water-leakage-accidents calculation unit includes a conversion coefficient selection unit that selects the conversion coefficient corresponding to a material of the buried piping.

3. The buried piping probability-of-water-leakage-accidents prediction apparatus according to claim 1 or 2, wherein

   the conversion coefficient is a coefficient that converts the exceedance probability of pipe wall thickness of the piping into the probability of water leakage accidents of the piping, and
   the probability-of-water-leakage-accidents calculation unit calculates the probability of water leakage accidents of the buried piping by multiplying the exceedance probability of pipe wall thickness of the buried piping and the conversion coefficient.

4. The buried piping probability-of-water-leakage-accidents prediction apparatus according to claim 1 or 2, wherein

   the conversion coefficient is a coefficient that converts the first index into the second index,
   the first index is a number-of-water-leakage-accidents evaluation index of the piping,
   the second index is the number of water leakage accidents of the piping per unit time, and
   the probability-of-water-leakage-accidents calculation unit calculates a number-of-water-leakage-accidents evaluation index of the buried piping by multiplying the exceedance probability of pipe wall thickness of the buried piping and a pipeline length of the buried piping, calculates the number of water leakage accidents of the buried piping per the unit time by multiplying the number-of-water-leakage-accidents evaluation index of the buried piping and the conversion coefficient, and calculates the probability of water leakage accidents of the buried piping by dividing the number of water leakage accidents of the buried piping per the unit time by the pipeline length of the buried piping.

5. A buried piping probability-of-water-leakage-accidents prediction method comprising:

   a step of calculating an exceedance probability of pipe wall thickness of buried piping by inputting a burial environment, a burial period of time and a pipe wall thickness of the buried piping to an exceedance-probability-of-pipe-wall-thickness prediction model; and

a step of calculating a probability of water leakage accidents of the buried piping using the exceedance probability of pipe wall thickness of the buried piping and a conversion coefficient, wherein

the exceedance-probability-of-pipe-wall-thickness prediction model is generated in accordance with a burial environment of piping and a pipe wall thickness of the piping, and provides an exceedance probability of pipe wall thickness of the piping that continuously changes with a continuous change in a burial period of time of the piping, and

the conversion coefficient is a coefficient that converts the exceedance probability of pipe wall thickness of the piping or a first index that can be calculated from the exceedance probability of pipe wall thickness of the piping into a probability of water leakage accidents of the piping or a second index that can calculate the probability of water leakage accidents of the piping.

6. The buried piping probability-of-water-leakage-accidents prediction method according to claim 5, wherein the step of calculating the probability of water leakage accidents of the buried piping includes a step of selecting the conversion coefficient corresponding to a material of the buried piping.

7. The buried piping probability-of-water-leakage-accidents prediction method according to claim 5 or 6, wherein

the conversion coefficient is a coefficient that converts the exceedance probability of pipe wall thickness of the piping into the probability of water leakage accidents of the piping, and

the step of calculating the probability of water leakage accidents of the buried piping is a step of calculating the probability of water leakage accidents of the buried piping by multiplying the exceedance probability of pipe wall thickness of the buried piping and the conversion coefficient.

8. The buried piping probability-of-water-leakage-accidents prediction method according to claim 5 or 6, wherein

the conversion coefficient is a coefficient that converts the first index into the second index,

the first index is a number-of-water-leakage-accidents evaluation index of the piping,

the second index is the number of water leakage accidents of the piping per unit time, and

the step of calculating the probability of water leakage accidents of the buried piping includes a step of calculating a number-of-water-leakage-accidents evaluation index of the buried piping by multiplying the exceedance probability of pipe wall thickness of the buried piping and a pipeline length of the buried piping, a step of calculating the number of water leakage accidents of the buried piping per the unit time by multiplying the number-of-water-leakage-accidents evaluation index of the buried piping and the conversion coefficient, and a step of calculating the probability of water leakage accidents of the buried piping by dividing the number of water leakage accidents of the buried piping per the unit time by the pipeline length of the buried piping.

9. A program that causes a processor to execute each step of the buried piping probability-of-water-leakage-accidents prediction method according to any one of claims 5 to 8.

FIG.1

FIG.2

# FIG.3

2

**16** BURIED PIPING PROBABILITY-OF-WATER-LEAKAGE-ACCIDENTS PREDICTION MODEL GENERATION UNIT

**17** EXCEEDANCE-PROBABILITY-OF-PIPE-WALL-THICKNESS PREDICTION MODEL GENERATION UNIT

**18** CONVERSION COEFFICIENT CALCULATION UNIT

**10** STORAGE UNIT

**11** REFERENCE PIPING DATA STORAGE UNIT

**12** BURIED PIPING PROBABILITY-OF-WATER-LEAKAGE-ACCIDENTS PREDICTION MODEL STORAGE UNIT

**6** BURIED PIPING PROBABILITY-OF-WATER-LEAKAGE-ACCIDENTS PREDICTION MODEL

**21** EXCEEDANCE-PROBABILITY-OF-PIPE-WALL-THICKNESS PREDICTION MODEL

**23** CONVERSION COEFFICIENT

**14** PROGRAM STORAGE UNIT

**26** BURIED PIPING PROBABILITY-OF-WATER-LEAKAGE-ACCIDENTS PREDICTION MODEL GENERATION PROGRAM

**13** CORROSION LAG TIME STORAGE UNIT

## FIG.4

| PIPELINE ID | BURIAL ENVIRONMENT | BURIAL PERIOD OF TIME $T_{ref}$ (YEAR) | REFERENCE CORROSION DEPTH (mm) | MATERIAL | NOMINAL PIPE WALL THICKNESS (mm) | PIPELINE LENGTH (km) | NUMBER OF WATER LEAKAGE ACCIDENTS PER UNIT TIME (CASE/5 YEARS) |
|---|---|---|---|---|---|---|---|
| · · · | A | 22 | 1.5 | DUCTILE | · · · | · · · | · · · |
| · · · | B | 10 | 0.3 | CAST IRON | · · · | · · · | · · · |
| · · · | C | · · · | · · · | · · · | · · · | · · · | · · · |
| · · · | D | · · · | · · · | · · · | · · · | · · · | · · · |

20

## FIG.5

| BURIAL ENVIRONMENT | NOMINAL PIPE WALL THICKNESS (mm) | EXCEEDANCE-PROBABILITY-OF-PIPE-WALL-THICKNESS PREDICTION MODEL |
|---|---|---|
| A | · · · | · · · |
| B | · · · | · · · |
| C | · · · | · · · |
| D | · · · | · · · |
| A | · · · | · · · |

21

# FIG.6

NOMINAL PIPE WALL THICKNESS 7.5mm

| | |
|---|---|
| ——— | EXCEEDANCE-PROBABILITY-OF-PIPE-WALL-THICKNESS PREDICTION MODEL OF BURIAL ENVIRONMENT D |
| —·—· | EXCEEDANCE-PROBABILITY-OF-PIPE-WALL-THICKNESS PREDICTION MODEL OF BURIAL ENVIRONMENT C |
| ------- | EXCEEDANCE-PROBABILITY-OF-PIPE-WALL-THICKNESS PREDICTION MODEL OF BURIAL ENVIRONMENT B |
| —··—· | EXCEEDANCE-PROBABILITY-OF-PIPE-WALL-THICKNESS PREDICTION MODEL OF BURIAL ENVIRONMENT A |

EXCEEDANCE PROBABILITY OF PIPE WALL THICKNESS (%)

BURIAL PERIOD OF TIME (YEAR)

# FIG.7

23

| MATERIAL OF PIPING | CONVERSION COEFFICIENT |
|---|---|
| DUCTILE | p |
| CAST IRON | q |

FIG.8

BURIAL ENVIRONMENT D

FIG.9

S1
CALCULATE LAG TIME $t_L$ OF CORROSION CORRESPONDING TO BURIAL ENVIRONMENT, BURIAL PERIOD OF TIME $T_{ref}$ AND REFERENCE CORROSION DEPTH FROM REFERENCE PIPING DATA 20

S2
ACQUIRE MODIFIED REFERENCE PIPING DATA CORRESPONDING TO BURIAL ENVIRONMENT

S3
GENERATE EXCEEDANCE-PROBABILITY-OF-CORROSION-DEPTH PREDICTION MODEL CORRESPONDING TO BURIAL ENVIRONMENT AND BURIAL PERIOD OF TIME OF PREDETERMINED RANGE

S4
GENERATE EXCEEDANCE-PROBABILITY-OF-CORROSION-DEPTH PREDICTION MODEL CORRESPONDING TO BURIAL ENVIRONMENT AND ARBITRARY BURIAL PERIOD OF TIME

S5
GENERATE EXCEEDANCE-PROBABILITY-OF-PIPE-WALL-THICKNESS PREDICTION MODEL 21 CORRESPONDING TO BURIAL ENVIRONMENT AND NOMINAL PIPE WALL THICKNESS

## FIG.10

S1

S11

EXTRACT REFERENCE PIPING DATA 20 OF PREDETERMINED
BURIAL ENVIRONMENT FROM REFERENCE PIPING DATA 20

S12

CALCULATE $1 - P(T_{ref})$ AND PERFORM NON-LINEAR
REGRESSION OF $1 - P(T_{ref})$

S13

CALCULATE PROBABILITY $Q(t_L)$ OF LAG TIME OF CORROSION

S14

CALCULATE CUMULATIVE RELATIVE FREQUENCY OF LAG
TIME $t_L$ OF CORROSION

S15

CALCULATE CUMULATIVE RELATIVE FREQUENCY OF REFERENCE
CORROSION DEPTH FOR EACH BURIAL PERIOD OF TIME $T_{ref}$ OF
PREDETERMINED RANGE AND EACH REFERENCE CORROSION
DEPTH OF PREDETERMINED RANGE

S16

CALCULATE LAG TIME $t_L$ OF CORROSION CORRESPONDING TO
BURIAL PERIOD OF TIME $T_{ref}$ OF PREDETERMINED RANGE AND
REFERENCE CORROSION DEPTH OF PREDETERMINED RANGE
FOR PREDETERMINED BURIAL ENVIRONMENT

S17

PERFORM S11 TO S16 FOR ALL OF BURIAL ENVIRONMENTS
A TO D

FIG.11

BURIAL ENVIRONMENT D

$$P(T_{ref})=n_0(T_{ref})/n_{all}(T_{ref})$$

NUMBER OF DATA

$n_{all}(1)$

$n_{all}(2)$

$n_{all}(3)$

$n_0(1)$ $n_0(2)$ $n_0(3)$

0

1  2  3 ...

BURIAL PERIOD OF TIME $T_{ref}$ (YEAR)

FIG.12

BURIAL ENVIRONMENT D

$1-P(T_{ref})$

1.00

0.75

0.50

0.25

0

0    20    40    60    80    100

BURIAL PERIOD OF TIME $T_{ref}$ (YEAR)

## FIG.13

BURIAL ENVIRONMENT D

PROBABILITY $Q(t_L)$ OF LAG TIME OF CORROSION (y-axis, 0 to 0.050)

LAG TIME $t_L$ OF CORROSION (YEAR) (x-axis, 0 to 100)

## FIG.14

BURIAL ENVIRONMENT D
BURIAL PERIOD OF TIME $T_{ref}$ : 15 TO 20 YEARS
REFERENCE CORROSION DEPTH (mm)

CUMULATIVE RELATIVE FREQUENCY (y-axis, 0 to 1.2)

LAG TIME $t_L$ OF CORROSION (YEAR) (x-axis, 0 to 80)

- ■ CUMULATIVE RELATIVE FREQUENCY OF REFERENCE CORROSION DEPTH
- - - - CUMULATIVE RELATIVE FREQUENCY OF LAG TIME $t_L$ OF CORROSION

## FIG.15

ACQUIRE PLURALITY OF DATA GROUPS BY SORTING REFERENCE PIPING DATA 20 EXTRACTED IN STEP S11 FOR EACH BURIAL PERIOD OF TIME $T_{ref}$ OF PREDETERMINED RANGE — S15a

CALCULATE CUMULATIVE RELATIVE FREQUENCY OF REFERENCE CORROSION DEPTH FOR EACH REFERENCE CORROSION DEPTH OF PREDETERMINED RANGE FOR ONE OF PLURALITY OF DATA GROUPS — S15b

PERFORM STEP 15b FOR ALL OF PLURALITY OF DATA GROUPS — S15c

## FIG.16

| BURIAL ENVIRONMENT | BURIAL PERIOD OF TIME $T_{ref}$ (YEAR) | REFERENCE CORROSION DEPTH (mm) | LAG TIME $t_L$ OF CORROSION (YEAR) |
|---|---|---|---|
| D | 10-15 | 0.0-0.5 | 17.5 |
| ... | ... | ... | ... |

FIG.17

BURIAL ENVIRONMENT D

REFERENCE CORROSION DEPTH (mm)

MODIFIED BURIAL PERIOD OF TIME (YEAR)

FIG.18

BURIAL ENVIRONMENT B

| | |
|---|---|
| ■ | DATA OF EXCEEDANCE PROBABILITY OF CORROSION DEPTH OF BURIAL PERIOD OF TIME OF 0 TO 10 YEARS |
| ▽ | DATA OF EXCEEDANCE PROBABILITY OF CORROSION DEPTH OF BURIAL PERIOD OF TIME OF 10 TO 20 YEARS |
| ● | DATA OF EXCEEDANCE PROBABILITY OF CORROSION DEPTH OF BURIAL PERIOD OF TIME OF 20 TO 30 YEARS |
| □ | DATA OF EXCEEDANCE PROBABILITY OF CORROSION DEPTH OF BURIAL PERIOD OF TIME OF 30 TO 40 YEARS |
| ▲ | DATA OF EXCEEDANCE PROBABILITY OF CORROSION DEPTH OF BURIAL PERIOD OF TIME OF 40 TO 50 YEARS |
| ☆ | DATA OF EXCEEDANCE PROBABILITY OF CORROSION DEPTH OF BURIAL PERIOD OF TIME OF 50 TO 60 YEARS |
| ○ | DATA OF EXCEEDANCE PROBABILITY OF CORROSION DEPTH OF BURIAL PERIOD OF TIME OF 60 TO 70 YEARS |

| | |
|---|---|
| —··— | EXCEEDANCE-PROBABILITY-OF-CORROSION-DEPTH PREDICTION MODEL OF BURIAL PERIOD OF TIME OF 0 TO 10 YEARS |
| ——— | EXCEEDANCE-PROBABILITY-OF-CORROSION-DEPTH PREDICTION MODEL OF BURIAL PERIOD OF TIME OF 10 TO 20 YEARS |
| —·— | EXCEEDANCE-PROBABILITY-OF-CORROSION-DEPTH PREDICTION MODEL OF BURIAL PERIOD OF TIME OF 20 TO 30 YEARS |
| —··— | EXCEEDANCE-PROBABILITY-OF-CORROSION-DEPTH PREDICTION MODEL OF BURIAL PERIOD OF TIME OF 30 TO 40 YEARS |
| ------ | EXCEEDANCE-PROBABILITY-OF-CORROSION-DEPTH PREDICTION MODEL OF BURIAL PERIOD OF TIME OF 40 TO 50 YEARS |
| ——— | EXCEEDANCE-PROBABILITY-OF-CORROSION-DEPTH PREDICTION MODEL OF BURIAL PERIOD OF TIME OF 50 TO 60 YEARS |
| – – – | EXCEEDANCE-PROBABILITY-OF-CORROSION-DEPTH PREDICTION MODEL OF BURIAL PERIOD OF TIME OF 60 TO 70 YEARS |

EXCEEDANCE PROBABILITY OF CORROSION DEPTH R(%)

CORROSION DEPTH x (mm)

FIG.19

S3

S31

EXTRACT MODIFIED REFERENCE PIPING DATA OF PREDETERMINED
BURIAL ENVIRONMENT FROM MODIFIED REFERENCE PIPING DATA

S32

ACQUIRE BASIC REGRESSION LINE THAT REGRESSES MODIFIED
REFERENCE DATA

S33

GENERATE CORROSION DEPTH EXCEEDANCE PREDICTION MODEL
CORRESPONDING TO BURIAL ENVIRONMENT AND BURIAL PERIOD
OF TIME OF PREDETERMINED RANGE BASED ON BASIC REGRESSION
LINE, VARIATION IN CORROSION RATE, AND DISTRIBUTION OF LAG
TIME OF CORROSION

S34

PERFORM S31 TO S33 FOR ALL OF BURIAL ENVIRONMENTS A TO D

FIG.20

BURIAL ENVIRONMENT D

log[MODIFIED BURIAL PERIOD OF TIME (YEAR)]

FIG.21

BURIAL ENVIRONMENT D

FIG.22

# FIG.23

BURIAL ENVIRONMENT D

| (A)<br>PERCENTILE REGRESSION LINE | (B)<br>COEFFICIENT j | (C)<br>COEFFICIENT k | (D)<br>PROBABILITY DENSITY OF PERCENTILE REGRESSION LINE | (E)<br>CORROSION DEPTH (mm) | (F)<br>MODIFIED BURIAL PERIOD OF TIME (YEAR) | (G)<br>LAG TIME $t_L$ OF CORROSION (YEAR) | (H)<br>BURIAL PERIOD OF TIME (F) + (G) (YEAR) | (I)<br>PROBABILITY $Q(t_L)$ OF LAG TIME OF CORROSION | (J)<br>PROBABILITY INDEX (D) × (I) |
|---|---|---|---|---|---|---|---|---|---|
| ⋮ | ⋮ | ⋮ | ⋮ | ⋮ | ⋮ | ⋮ | ⋮ | ⋮ | ⋮ |
| 50 | 0.333 | 0.605 | 0.40 | 0 | 0.0 | 0 | 0.0 | 0.045 | 0.018 |
| 50 | 0.333 | 0.605 | 0.40 | 0 | 0.0 | 1 | 1.0 | 0.043 | 0.017 |
| 50 | 0.333 | 0.605 | 0.40 | 0 | 0.0 | 2 | 2.0 | 0.041 | 0.016 |
| ⋮ | ⋮ | ⋮ | ⋮ | ⋮ | ⋮ | ⋮ | ⋮ | ⋮ | ⋮ |
| 50 | 0.333 | 0.605 | 0.40 | 0 | 0.0 | 79 | 79.0 | 0.001 | 0.001 |
| 50 | 0.333 | 0.605 | 0.40 | 0 | 0.0 | 80 | 80.0 | 0.001 | 0.000 |
| ⋮ | ⋮ | ⋮ | ⋮ | ⋮ | ⋮ | ⋮ | ⋮ | ⋮ | ⋮ |
| 50 | 0.333 | 0.605 | 0.40 | 1 | 5.6 | 0 | 5.6 | 0.045 | 0.018 |
| 50 | 0.333 | 0.605 | 0.40 | 1 | 5.6 | 1 | 6.6 | 0.043 | 0.017 |
| 50 | 0.333 | 0.605 | 0.40 | 1 | 5.6 | 2 | 7.6 | 0.041 | 0.016 |
| ⋮ | ⋮ | ⋮ | ⋮ | ⋮ | ⋮ | ⋮ | ⋮ | ⋮ | ⋮ |
| 95 | 0.568 | 0.602 | 0.10 | 0 | 0 | 0 | 0 | 0.045 | 0.005 |
| 95 | 0.568 | 0.602 | 0.10 | 0 | 0 | 1 | 1 | 0.043 | 0.004 |
| ⋮ | ⋮ | ⋮ | ⋮ | ⋮ | ⋮ | ⋮ | ⋮ | ⋮ | ⋮ |

EP 4 443 133 A1

FIG.24

BURIAL ENVIRONMENT D

| CORROSION DEPTH (mm) | BURIAL PERIOD OF TIME | | | | |
|---|---|---|---|---|---|
| | 0 TO 10 YEARS | 10 TO 20 YEARS | 20 TO 30 YEARS | · · · | 60 TO 70 YEARS |
| 0 | · · · | · · · | · · · | · · · | · · · |
| 1 | · · · | · · · | · · · | · · · | · · · |
| 2 | · · · | · · · | · · · | · · · | · · · |
| · · · | · · · | · · · | · · · | · · · | · · · |
| TOTAL | 1.00 | 1.00 | 1.00 | · · · | 1.00 |

FIG.25

| | |
|---|---|
| ○ | DATA OF COEFFICIENT a FOR BURIAL ENVIRONMENT D |
| □ | DATA OF COEFFICIENT a FOR BURIAL ENVIRONMENT C |
| ● | DATA OF COEFFICIENT a FOR BURIAL ENVIRONMENT B |
| ■ | DATA OF COEFFICIENT a FOR BURIAL ENVIRONMENT A |

| | |
|---|---|
| ———— | REGRESSION LINE OF COEFFICIENT a FOR BURIAL ENVIRONMENT D |
| —·—··— | REGRESSION LINE OF COEFFICIENT a FOR BURIAL ENVIRONMENT C |
| -------- | REGRESSION LINE OF COEFFICIENT a FOR BURIAL ENVIRONMENT B |
| —··—··— | REGRESSION LINE OF COEFFICIENT a FOR BURIAL ENVIRONMENT A |

COEFFICIENT a

BURIAL PERIOD OF TIME (YEAR)

## FIG.26

○ DATA OF COEFFICIENT b FOR BURIAL ENVIRONMENT D
□ DATA OF COEFFICIENT b FOR BURIAL ENVIRONMENT C
● DATA OF COEFFICIENT b FOR BURIAL ENVIRONMENT B
■ DATA OF COEFFICIENT b FOR BURIAL ENVIRONMENT A

—————— REGRESSION CURVE OF COEFFICIENT b FOR BURIAL ENVIRONMENT D
— · — ·· REGRESSION CURVE OF COEFFICIENT b FOR BURIAL ENVIRONMENT C
- - - - - - - REGRESSION CURVE OF COEFFICIENT b FOR BURIAL ENVIRONMENT B
— · · — ·· REGRESSION CURVE OF COEFFICIENT b FOR BURIAL ENVIRONMENT A

COEFFICIENT b

BURIAL PERIOD OF TIME (YEAR)

FIG.27

```
            ┌─────────────┐
            │    START    │
            └──────┬──────┘
                   │
                   ▼                                        S61
┌──────────────────────────────────────────────────────────┐
│ SELECT REFERENCE PIPING DATA 20 OF SPECIFIC MATERIAL       │◄──┐
│ FROM REFERENCE PIPING DATA 20                              │   │
└──────────────────────┬─────────────────────────────────────┘   │
                       │                                 S62       │
┌──────────────────────────────────────────────────────────┐   │
│ CALCULATE EXCEEDANCE PROBABILITY OF PIPE WALL              │   │
│ THICKNESS FOR EACH PIPELINE ID                            │   │
└──────────────────────┬─────────────────────────────────────┘   │
                       │                                 S63       │
┌──────────────────────────────────────────────────────────┐   │
│ CALCULATE PROBABILITY OF WATER LEAKAGE ACCIDENTS FOR       │   │
│ EACH EXCEEDANCE PROBABILITY OF PIPE WALL THICKNESS OF      │   │
│ PREDETERMINED RANGE                                       │   │
└──────────────────────┬─────────────────────────────────────┘   │
                       │                                 S64       │
┌──────────────────────────────────────────────────────────┐   │
│           CALCULATE CONVERSION COEFFICIENT 23             │   │
└──────────────────────┬─────────────────────────────────────┘   │
                       │                                 S69       │
          ╱────────────────────────────────────────────────╲  NO │
         ╱ HAS CONVERSION COEFFICIENT 23 BEEN CALCULATED FOR ╲────┘
         ╲ ALL OF MATERIALS?                                ╱
          ╲────────────────────────────────────────────────╱
                       │ YES
                       ▼
            ┌─────────────┐
            │     END     │
            └─────────────┘
```

FIG.28

28

| PIPELINE ID | MATERIAL | EXCEEDANCE PROBABILITY OF PIPE WALL THICKNESS (%) | PIPELINE LENGTH (km) | NUMBER OF WATER LEAKAGE ACCIDENTS PER UNIT TIME (CASE/YEAR) |
|---|---|---|---|---|
| ・・・ | DUCTILE | ・・・ | ・・・ | ・・・ |
| ・・・ | DUCTILE | ・・・ | ・・・ | ・・・ |
| ・・・ | DUCTILE | ・・・ | ・・・ | ・・・ |

FIG.29

FIG.30

## FIG.31

## FIG.32

FIG.33

# FIG.34

3

| BURIED PIPING DATA ACCEPTANCE UNIT | 50 |
|---|---|

| BURIED PIPING DATA PREPROCESSING UNIT | 51 |
|---|---|

| EXCEEDANCE-PROBABILITY-OF-PIPE-WALL-THICKNESS CALCULATION UNIT | 52 |
|---|---|

PROBABILITY-OF-WATER-LEAKAGE-ACCIDENTS CALCULATION UNIT 54

CONVERSION COEFFICIENT SELECTION UNIT 55

PROBABILITY-OF-WATER-LEAKAGE-ACCIDENTS PREDICTION RESULT OUTPUT UNIT 57

STORAGE UNIT 30

BURIED PIPING DATA STORAGE UNIT 31

BURIED PIPING DATA 40

PIPELINE MAP 41

BURIED PIPING ATTRIBUTE DATA 42

NOMINAL PIPE WALL THICKNESS DATABASE UNIT 32

BURIAL ENVIRONMENT MAP STORAGE UNIT 33

PREPROCESSED BURIED PIPING DATA STORAGE UNIT 34

PROBABILITY-OF-WATER-LEAKAGE-ACCIDENTS STORAGE UNIT 37

PROGRAM STORAGE UNIT 38

BURIED PIPING PROBABILITY-OF-WATER-LEAKAGE-ACCIDENTS PREDICTION PROGRAM 48

BURIED PIPING PROBABILITY-OF-WATER-LEAKAGE-ACCIDENTS PREDICTION MODEL STORAGE UNIT 36

BURIED PIPING PROBABILITY-OF-WATER-LEAKAGE-ACCIDENTS PREDICTION MODEL 6

EXCEEDANCE-PROBABILITY-OF-PIPE-WALL-THICKNESS PREDICTION MODEL 21

CONVERSION COEFFICIENT 23

## FIG.35

40(41)

## FIG.36

40(42)

| PIPELINE ID | INSTALLATION YEAR | NOMINAL DIAMETER | TYPE OF JOINT | TYPE OF PIPE WALL THICKNESS | PIPELINE LENGTH (km) | MATERIAL |
|---|---|---|---|---|---|---|
| · · · | 1987 | 100 | K | 3 | · · · | DUCTILE |
| · · · | 2000 | 150 | NS | 1 | · · · | CAST IRON |

## FIG.37

43

| INSTALLATION YEAR | NOMINAL DIAMETER | TYPE OF JOINT | TYPE OF PIPE WALL THICKNESS | NOMINAL PIPE WALL THICKNESS (mm) |
|---|---|---|---|---|
| 1987 | 100 | K | 3 | · · · |
| 2000 | 150 | NS | 1 | · · · |

## FIG.38

## FIG.39

| GROUND SURFACE | TOPOGRAPHY | BURIAL ENVIRONMENT |
|---|---|---|
| LAND EQUIVALENT TO LAYER GROUP | ALL | A |
| CONTAINING CLAY | LOWLAND (1) (SUCH AS WETLAND) | |
| HUMAN-MADE LAND | ALL | B |
| CONTAINING CLAY | LOWLAND (2) (NATURAL LEVEE) | |
| ROCKY LAND | ALL | C |
| CONTAINING CLAY | MOUNTAINOUS LAND | |
| SANDY LAND | ALL | D |

## FIG.40

| PIPELINE ID | BURIAL ENVIRONMENT | BURIAL PERIOD OF TIME T (YEAR) | NOMINAL PIPE WALL THICKNESS (mm) | MATERIAL |
|---|---|---|---|---|
| · · · | A | 44 | · · · | DUCTILE |
| · · · | B | 21 | · · · | CAST IRON |

## FIG.41

60(61)

| PIPELINE ID | PROBABILITY OF WATER LEAKAGE ACCIDENTS (CASE/YEAR/km) |
|---|---|
| . . . | . . . |
| . . . | . . . |

## FIG.42

60(62)

| | PROBABILITY OF WATER LEAKAGE ACCIDENTS |
|---|---|
| ——— | 1.0 CASE OR MORE/YEAR/km |
| — — — | 0.5 CASES OR MORE/YEAR/km |
| – – – | 0.1 CASES OR MORE/YEAR/km |
| –·–·– | 0.05 CASES OR MORE/YEAR/km |
| ······ | LESS THAN 0.05 CASES/YEAR/km |

## FIG.43

S81

GENERATE PREPROCESSED BURIED PIPING DATA 46

S82

CALCULATE EXCEEDANCE PROBABILITY OF PIPE WALL THICKNESS FOR EACH PIPELINE ID

S83

CALCULATE PROBABILITY OF WATER LEAKAGE ACCIDENTS FOR EACH PIPELINE ID

S84

OUTPUT PROBABILITY-OF-WATER-LEAKAGE-ACCIDENTS PREDICTION RESULT 60 FOR EACH PIPELINE ID

FIG.44

S83

S83a

SELECT CONVERSION COEFFICIENT 23 CORRESPONDING TO
MATERIAL OF BURIED PIPING FOR EACH PIPELINE ID

S83b

CALCULATE PROBABILITY OF WATER LEAKAGE ACCIDENTS FOR
EACH PIPELINE ID BY MULTIPLYING EXCEEDANCE PROBABILITY
OF PIPE WALL THICKNESS AND CONVERSION COEFFICIENT 23

FIG.45

```
                    ┌──────────┐
                    │  START   │
                    └──────────┘
                         │
                         ▼                              ╭─ S61
┌───────────────────────────────────────────────────┐
│ SELECT REFERENCE PIPING DATA 20 OF SPECIFIC MATERIAL│◄──┐
│ FROM REFERENCE PIPING DATA 20                       │   │
└───────────────────────────────────────────────────┘   │
                         │                              ╭─ S62
                         ▼                                │
┌───────────────────────────────────────────────────┐   │
│ CALCULATE EXCEEDANCE PROBABILITY OF PIPE WALL       │   │
│ THICKNESS FOR EACH PIPELINE ID                      │   │
└───────────────────────────────────────────────────┘   │
                         │                              ╭─ S66
                         ▼                                │
┌───────────────────────────────────────────────────┐   │
│ CALCULATE NUMBER-OF-WATER-LEAKAGE-ACCIDENTS         │   │
│ EVALUATION INDEX FOR EACH PIPELINE ID               │   │
└───────────────────────────────────────────────────┘   │
                         │                              ╭─ S67
                         ▼                                │
┌───────────────────────────────────────────────────┐   │
│ CALCULATE NUMBER-OF-WATER-LEAKAGE-ACCIDENTS         │   │
│ EVALUATION INDEX AND NUMBER OF WATER LEAKAGE        │   │
│ ACCIDENTS PER UNIT TIME FOR EACH BURIAL ENVIRONMENT │   │
└───────────────────────────────────────────────────┘   │
                         │                              ╭─ S68
                         ▼                                │
┌───────────────────────────────────────────────────┐   │
│ CALCULATE CONVERSION COEFFICIENT 23                 │   │
└───────────────────────────────────────────────────┘   │
                         │                              ╭─ S69
                         ▼                                │
         ╱───────────────────────────────────╲  NO       │
        ╱ HAS CONVERSION COEFFICIENT 23 BEEN   ╲─────────┘
        ╲ CALCULATED FOR ALL OF MATERIALS?     ╱
         ╲───────────────────────────────────╱
                         │ YES
                         ▼
                    ┌──────────┐
                    │   END    │
                    └──────────┘
```

FIG.46

66

| PIPELINE ID | MATERIAL | BURIAL ENVIRONMENT | EXCEEDANCE PROBABILITY OF PIPE WALL THICKNESS (%) | PIPELINE LENGTH (km) | NUMBER-OF-WATER-LEAKAGE-ACCIDENTS EVALUATION INDEX (% * km) | NUMBER OF WATER LEAKAGE ACCIDENTS PER UNIT TIME (NUMBER/YEAR) |
|---|---|---|---|---|---|---|
| ・・・ | DUCTILE | A | ・・・ | ・・・ | ・・・ | ・・・ |
| ・・・ | DUCTILE | D | ・・・ | ・・・ | ・・・ | ・・・ |
| ・・・ | DUCTILE | B | ・・・ | ・・・ | ・・・ | ・・・ |

FIG.47

NUMBER OF WATER LEAKAGE ACCIDENTS PER UNIT TIME (CASE/YEAR)

SLOPE p

■ BURIAL ENVIRONMENT A
● BURIAL ENVIRONMENT B
□ BURIAL ENVIRONMENT C
○ BURIAL ENVIRONMENT D

NUMBER-OF-WATER-LEAKAGE-ACCIDENTS EVALUATION INDEX (%*km)

FIG.48

PIPELINE LENGTH (km)

BURIAL ENVIRONMENT

EP 4 443 133 A1

FIG.49

NUMBER OF WATER LEAKAGE ACCIDENTS PER UNIT TIME (CASE/YEAR)

SLOPE q

- ■ BURIAL ENVIRONMENT A
- ● BURIAL ENVIRONMENT B
- □ BURIAL ENVIRONMENT C
- ○ BURIAL ENVIRONMENT D

NUMBER-OF-WATER-LEAKAGE-ACCIDENTS EVALUATION INDEX (%*km)

FIG.50

PIPELINE LENGTH (km)

BURIAL ENVIRONMENT

# FIG.51

46

| PIPELINE ID | BURIAL ENVIRONMENT | BURIAL PERIOD OF TIME T (YEAR) | NOMINAL PIPE WALL THICKNESS (mm) | PIPELINE LENGTH (km) | MATERIAL |
|---|---|---|---|---|---|
| ... | A | ... | ... | ... | DUCTILE |
| ... | B | ... | ... | ... | CAST IRON |

# FIG.52

S83

S83c

CALCULATE NUMBER-OF-WATER-LEAKAGE-ACCIDENTS EVALUATION INDEX FOR EACH PIPELINE ID

S83d

SELECT CONVERSION COEFFICIENT 23 CORRESPONDING TO MATERIAL OF BURIED PIPING FOR EACH PIPELINE ID

S83e

CALCULATE NUMBER OF WATER LEAKAGE ACCIDENTS PER UNIT TIME FOR EACH PIPELINE ID

S83f

CALCULATE PROBABILITY OF WATER LEAKAGE ACCIDENTS FOR EACH PIPELINE ID BY DIVIDING NUMBER OF WATER LEAKAGE ACCIDENTS PER UNIT TIME BY PIPELINE LENGTH OF BURIED PIPING

## INTERNATIONAL SEARCH REPORT

| International application No. |
| --- |
| **PCT/JP2022/042992** |

| | |
| --- | --- |
| **A.** | **CLASSIFICATION OF SUBJECT MATTER** |

***G01N 17/00*** (2006.01)i
FI: G01N17/00

According to International Patent Classification (IPC) or to both national classification and IPC

| | |
| --- | --- |
| **B.** | **FIELDS SEARCHED** |

Minimum documentation searched (classification system followed by classification symbols)

G01N17/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2021-056224 A (KUBOTA CORP.) 08 April 2021 (2021-04-08)<br>paragraphs [0021], [0235]-[0254], fig. 53-62 | 1-9 |
| A | JP 2012-107911 A (VENTURE ACADEMIA KK) 07 June 2012 (2012-06-07) | 1-9 |
| A | JP 2014-202603 A (SAPPORO FACILITY MANAGEMENT INCORPORATED COMPANY) 27 October 2014 (2014-10-27) | 1-9 |
| A | WO 2019/230975 A1 (ASAHI KASEI KABUSHIKI KAISHA) 05 December 2019 (2019-12-05) | 1-9 |
| A | WO 2020/179108 A1 (HITACHI, LTD.) 10 September 2020 (2020-09-10) | 1-9 |
| A | CN 112304264 A (CHINA NATIONAL PETROLEUM CORP.) 02 February 2021 (2021-02-02) | 1-9 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 December 2022** | **17 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div style="text-align:center">

**INTERNATIONAL SEARCH REPORT**
**Information on patent family members**

</div>

| Patent document cited in search report | | | Publication date (day/month/year) | Patent family member(s) | | | Publication date (day/month/year) |
|---|---|---|---|---|---|---|---|
| JP | 2021-056224 | A | 08 April 2021 | WO | 2022/070706 | A1 | |
| JP | 2012-107911 | A | 07 June 2012 | (Family: none) | | | |
| JP | 2014-202603 | A | 27 October 2014 | (Family: none) | | | |
| WO | 2019/230975 | A1 | 05 December 2019 | (Family: none) | | | |
| WO | 2020/179108 | A1 | 10 September 2020 | (Family: none) | | | |
| CN | 112304264 | A | 02 February 2021 | (Family: none) | | | |

International application No.

**PCT/JP2022/042992**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007107882 A